# EUROPEAN PATENT SPECIFICATION

(11) **EP 3 536 564 B1**
(45) Date of publication and mention of the grant of the patent: **30.09.2020**
(21) Application number: 19158764.1
(22) Date of filing: 22.02.2019
(51) Int. Cl.: B60R 25/20, B60R 25/30, G08B 13/196

(54) **IN-VEHICLE SYSTEM AND GETTING-ON-AND-OFF AUTHENTICATION SYSTEM**
FAHRZEUGINTERNES SYSTEM UND AUTHENTIFIZIERUNGSSYSTEM FÜR EIN- UND AUSSTIEG
SYSTÈME EMBARQUÉ DANS UN VÉHICULE ET SYSTÈME D'AUTHENTIFICATION À LA MONTÉE ET À LA DESCENTE

(30) Priority: 05.03.2018 JP 2018038181
(43) Date of publication of application: 11.09.2019
(73) Proprietor: YAZAKI CORPORATION, Minato-ku, Tokyo 108-8333 (JP)
(72) Inventor: SAITO, Masaki, Susono-shi, Shizuoka 410-1194 (JP); ISHII, Koji, Susono-shi, Shizuoka 410-1194 (JP); TAKAYAMA, Yurie, Susono-shi, Shizuoka 410-1194 (JP)
(74) Representative: Grünecker Patent- und Rechtsanwälte PartG mbB

(56) References cited:
- WO-A1-2019/040929
- FR-A1- 2 819 958
- US-A1- 2002 152 010
- US-A1- 2005 206 502
- US-A1- 2016 311 400
- US-A1- 2017 080 900
- US-A1- 2017 115 125
- US-A1- 2017 294 130

## Description

### BACKGROUND OF THE INVENTION

### 1. Field of the Invention

The present invention relates to an in-vehicle system and a getting-on-and-off authentication system.

### 2. Description of the Related Art

As a conventional in-vehicle system mounted on a vehicle, for example, Japanese Patent Application Laid-open No. 2015-074368 discloses a system in which devices mounted on a vehicle and a server on a cloud environment outside a vehicle transmit and receive information via a communication module.

However, the system disclosed in Japanese Patent Application Laid-open No. 2015-074368 may be mounted on a vehicle used by the general public users such as, for example, a bus, a taxi, or a ride-sharing car. In this case, the system preferably manages getting on and off of users on a vehicle appropriately (see also US2017115125A).

### SUMMARY OF THE INVENTION

The present invention has been made to provide an in-vehicle system and a getting-on-and-off authentication system capable of managing getting on and off of users on a vehicle appropriately. The invention resides in the in-vehicle systems of claims 1 and 6 and in the systems of claims 10 and 11.

In order to achieve the above mentioned object, an in-vehicle system according to one aspect of the present invention includes a reading unit provided in a vehicle, and configured to read identification information capable of identifying a person; a communication unit that transmits the identification information read by the reading unit to an external device outside the vehicle, and that receives retrieval result information retrieved on the basis of the identification information by the external device; and a getting-on-and-off authorization processor capable of executing a process of authorizing a getting on and off of a person specified by the identification information on the vehicle on the basis of the retrieval result information received by the communication unit.

According to another aspect of the present invention, in the in-vehicle system, it is possible to configure that the retrieval result information includes authentication result information corresponding to an authentication result of the identification information obtained by the external device based on the identification information transmitted to the external device and reservation information which has been registered in advance in the external device, and which is related to reservation of the vehicle having transmitted the identification information.

According to still another aspect of the present invention, in the in-vehicle system, it is possible to further include that a position information acquiring unit that acquires present position information indicating a present position of the vehicle, wherein the communication unit transmits the present position information acquired by the position information acquiring unit to the external device, and the external device generates the authentication result information indicating that a person specified by the identification information is authenticated when a person specified by the identification information transmitted from the communication unit matches a person specified by reserving person information included in the reservation information of the vehicle retrieved on the basis of the identification information, and a present position of the vehicle specified by the present position information transmitted from the communication unit matches a getting-on-and-off position specified by reserved getting-on-and-off position information included in the reservation information retrieved on the basis of the identification information.

According to still another aspect of the present invention, in the in-vehicle system, it is possible to configure that the retrieval result information includes reservation information which has been registered in advance in the external device, and which is related to reservation of the vehicle retrieved by the external device on the basis of the identification information transmitted to the external device.

According to still another aspect of the present invention, in the in-vehicle system, it is possible to further include that a position information acquiring unit that acquires present position information indicating a present position of the vehicle; and an authentication processor that authenticates a person specified by the identification information on the basis of the identification information read by the reading unit, the present position information acquired by the position information acquiring unit, and the reservation information included in the retrieval result information received by the communication unit, wherein the authentication processor that authenticates a person specified by the identification information when a persons specified by the identification information read by the reading unit matches a person specified by reserving person information included in the reservation information received by the communication unit, and a present position of the vehicle specified by the present position information acquired by the position information acquiring unit matches a getting-on-and-off position specified by reserved getting-on-and-off position information included in the reservation information received by the communication unit.

In order to achieve the above mentioned object, the in-vehicle system according to still another aspect of the present invention includes a reading unit that is provided in a vehicle, and configured to read identification information capable of identifying a person; a communication unit that transmits vehicle identification information for specifying the vehicle to an external device outside the vehicle, and that receives retrieval result information retrieved on the basis of the vehicle identification information by the external device; and a getting-on-and-off authorization processor capable of executing a process of authorizing a getting on and off of a person specified by the identification information on the vehicle on the basis of the identification information read by the reading unit and the retrieval result information received by the communication unit.

According to still another aspect of the present invention, in the in-vehicle system, it is possible to configure that the getting-on-and-off authorization processor authorizes a getting on and off of a person specified by the identification information on the vehicle when the person specified by the identification information is authenticated and does not authorize a getting on and off of a person specified by the identification information on the vehicle when the person specified by the identification information is not authenticated.

According to still another aspect of the present invention, in the in-vehicle system, it is possible to further include that a door operation processor that executes a door opening process of opening a door of the vehicle when a getting on and off of a person specified by the identification information on the vehicle is authorized by the getting-on-and-off authorization processor, and that does not execute the door opening process when a getting on and off of a person specified by the identification information on the vehicle is not authorized by the getting-on-and-off authorization processor.

According to still another aspect of the present invention, in the in-vehicle system, it is possible to configure that the reading unit includes an vehicle outside reading unit provided to be exposed to the outside of the vehicle and a vehicle inside reading unit provided to be exposed to the inside of the vehicle, and the vehicle outside reading unit and the vehicle inside reading unit are unitized by a housing.

In order to achieve the above mentioned object, the in-vehicle system according to still another aspect of the present invention includes an in-vehicle system mounted on a vehicle; and an external device provided outside the vehicle, wherein the in-vehicle system includes: a reading unit provided in the vehicle, and configured to read identification information capable of identifying a person; a communication unit that transmits the identification information read by the reading unit to the external device, and that receives retrieval result information retrieved on the basis of the identification information by the external device; and a getting-on-and-off authorization processor capable of executing a process of authorizing a getting on and off of a person specified by the identification information on the vehicle on the basis of the retrieval result information received by the communication unit.

In order to achieve the above mentioned object, a getting-on-and-off authentication system according to still another aspect of the present invention includes an in-vehicle system mounted on a vehicle; and an external device provided outside the vehicle, wherein the in-vehicle system includes: a reading unit provided in the vehicle, and configured to read identification information capable of identifying a person; a communication unit that transmits vehicle identification information for specifying the vehicle to the external device, and that receives retrieval result information retrieved on the basis of the vehicle identification information by the external device; and a getting-on-and-off authorization processor capable of executing a process of authorizing a getting on and off of a person specified by the identification information on the vehicle on the basis of the identification information read by the reading unit and the retrieval result information received by the communication unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a schematic configuration of a getting-on-and-off authentication system according to a first embodiment;
FIG. 2 is a schematic perspective view illustrating an example of an installation example of a reading unit included in a getting-on-and-off authentication unit according to the first embodiment;
FIG. 3 is a schematic cross-sectional view illustrating an example of an installation example of the reading unit included in the getting-on-and-off authentication unit according to the first embodiment;
FIG. 4 is a flowchart illustrating an example of a getting-on-and-off authentication method of the getting-on-and-off authentication system according to the first embodiment;
FIG. 5 is a schematic diagram illustrating a specific example of the getting-on-and-off authentication method of the getting-on-and-off authentication system according to the first embodiment;
FIG. 6 is a schematic diagram illustrating a specific example of the getting-on-and-off authentication method of the getting-on-and-off authentication system according to the first embodiment;
FIG. 7 is a schematic diagram illustrating a specific example of the getting-on-and-off authentication method of the getting-on-and-off authentication system according to the first embodiment;
FIG. 8 is a block diagram illustrating a schematic configuration of a getting-on-and-off authentication system according to a second embodiment;
FIG. 9 is a flowchart illustrating an example of a getting-on-and-off authentication method of the getting-on-and-off authentication system according to the second embodiment;
FIG. 10 is a block diagram illustrating a schematic configuration of a getting-on-and-off authentication system according to a third embodiment; and
FIG. 11 is a flowchart illustrating an example of a getting-on-and-off authentication method of the getting-on-and-off authentication system according to the third embodiment.

### DETAILED DESCRIPTION OF THE PREFERRED EMBODIMENTS

Embodiments according to the present invention will be described below on the basis of the drawings. Note that the present invention is not limited to these embodiments. In addition, the constituent elements in the embodiments described below include those that can be easily replaced by a person skilled in the art or those that are substantially the same.

### First Embodiment

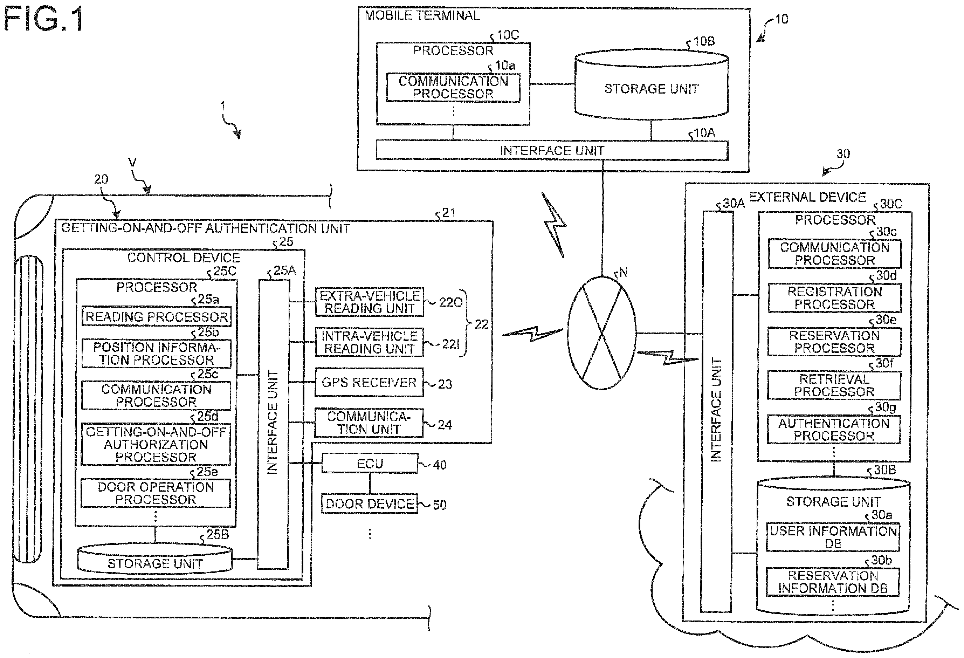

A getting-on-and-off authentication system 1 of the present embodiment illustrated in FIG. 1 includes a mobile terminal 10, a getting-on-and-off authentication unit 20 as an in-vehicle system, and an external device 30. The mobile terminal 10 is typically a device that a user of a vehicle V can hold and carry. The getting-on-and-off authentication unit 20 is mounted on the vehicle V. The external device 30 is provided outside the vehicle V. The getting-on-and-off authentication system 1 of the present embodiment is a system in which the getting-on-and-off authentication unit 20 and the external device 30 cooperate whereby users (persons) getting on and off the vehicle V are authenticated, and getting on and off of users on the vehicle V are managed appropriately. Hereinafter, a configuration of the getting-on-and-off authentication system 1 will be described in detail with reference to the diagrams.

In the getting-on-and-off authentication system 1 illustrated in FIG. 1, unless particularly stated otherwise, a connection method between respective constituent elements for supplying electric power and exchanging control signals and various pieces of information may be cable-based connection (for example, including optical communication using optical fiber) which uses a wire material such as electric wires or optical fiber or radio-based connection such as wireless communication or contact-less power transmission. The vehicle V to which the getting-on-and-off authentication unit 20 is applied may be an arbitrary vehicle which uses a motor or an engine as a driving source, such as an electric vehicle (EV), a hybrid electric vehicle (HEV), a plug-in hybrid electric vehicle (PHEV), a gasoline vehicle, or a diesel vehicle. Moreover, the vehicle V may be operated by manual operation by drivers, semi-automated operation, or fully-automated operation. Furthermore, the vehicle V is a private car possessed by a person, a rental car, a sharing car, a bus, a taxi, or a ride-sharing car. In the following description, as an example, it is assumed that the vehicle V is a fully-automated vehicle such as a bus, a taxi, or a ride-sharing car which is managed by a specific operator, used by the general public users, and moved automatically to a getting-on-and-off position reserved by a user.

First, the mobile terminal 10 will be described. The mobile terminal 10 is an electronic device which can be carried into the vehicle V and be carried out of the vehicle V. The mobile terminal 10 can transmit and receive information to and from the getting-on-and-off authentication unit 20 and the external device 30 via a network N. Here, the network N connects the mobile terminal 10, the getting-on-and-off authentication unit 20, and the external device 30 so that they can communicate with each other. The network N may use an arbitrary communication network regardless of whether it is a cable network or a wireless network. The mobile terminal 10 includes an electronic circuit mainly including a well-known microcomputer including a central computation processor such as a central processing unit (CPU), a micro processing unit (MPU), an application specific integrated circuit (ASIC), or a field programmable gate array (FPGA), a read only memory (ROM), a random access memory (RAM), and an interface. The mobile terminal 10 may be configured as a general-purpose device which can be used for other purposes and may be configured as a dedicated device exclusive for the getting-on-and-off authentication system 1. The mobile terminal 10 is configured, for example, as a mobile phone, a smartphone, a PHS, a PDA, a tablet PC, a notebook PC, or a wearable terminal.

Specifically, the mobile terminal 10 functionally and schematically includes an interface unit 10A as a mobile terminal communication unit, a storage unit 10B, and a processor 10C. The mobile terminal 10 may further include an operation input unit, an information display unit, a speaker, a camera, and the like. The interface unit 10A, the storage unit 10B, and the processor 10C are connected together so that various pieces of information can be exchanged therebetween. The interface unit 10A is an interface for transmitting and receiving various pieces of information with the network N or the like. The interface unit 10A has a function of communicating information with the network N via electric wires or the like and a function of wirelessly communicating information with the network N via a wireless communication unit or the like. The interface unit 10A also has a function of communicating with the reading unit 22 of the getting-on-and-off authentication unit 20 to be described later by wireless communication according to a near-field wireless communication method or the like. Examples of the near-field wireless communication method include near-field wireless communication (Near Field Communication (NFC)) such as W-LAN, Wi-Fi (registered trademark), or Bluetooth (registered trademark). The storage unit 10B is a mobile-terminal-built-in storage device incorporated into the mobile terminal 10. The storage unit 10B stores conditions and information necessary for various processes in the mobile terminal 10, various programs and applications executed by the mobile terminal 10, and control data and the like. Moreover, the storage unit 10B may temporarily store various pieces of information received by the interface unit 10A. These pieces of information stored in the storage unit 10B are read by the processor 10C or the like as necessary. The processor 10C is a portion that executes various programs stored in the storage unit 10B on the basis of various input signals and the like and executes various processes for realizing various functions when the programs run. The processor 10C functionally and schematically includes a communication processor 10a. The communication processor 10a is a portion having a function of controlling the interface unit 10A and executing a terminal-side communication process. The terminal-side communication process is a process of transmitting and receiving various pieces of information between a device (the getting-on-and-off authentication unit 20, the external device 30, and the like) connected to the network N and the mobile terminal 10 with the aid of the interface unit 10A.

Next, the getting-on-and-off authentication unit 20 will be described. The getting-on-and-off authentication unit 20 is a system that authorizes a getting on and off of a user on the vehicle V on the basis of an authentication result of a user (a person) getting on and off the vehicle V. The getting-on-and-off authentication unit 20 is realized when the constituent elements illustrated in FIG. 1 are mounted on the vehicle V. Specifically, the getting-on-and-off authentication unit 20 includes a housing 21, a reading unit 22, a global positioning system (GPS) receiver 23 as a position information acquiring unit, a communication unit 24 as a vehicle-side communication unit, and a control device 25. The getting-on-and-off authentication unit 20 is formed by unitizing the housing 21, the reading unit 22, the GPS receiver 23, the communication unit 24, and the control device 25.

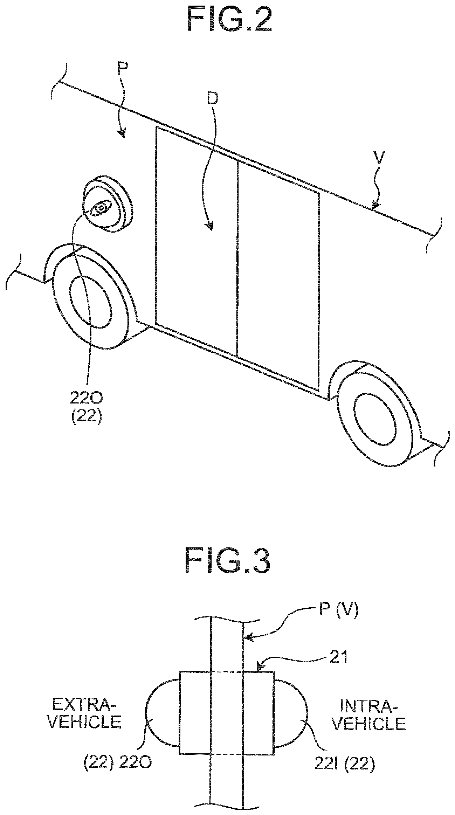

The housing 21 is a member in which the reading unit 22, the GPS receiver 23, the communication unit 24, and the control device 25 that form the getting-on-and-off authentication unit 20 are assembled. The housing 21 is formed of a synthetic resin having insulating properties, for example. The housing 21 may be formed in a generally hollow box shape obtained by combining a plurality of members, for example. The housing 21 has the hollow box shape in which the reading unit 22, the GPS receiver 23, the communication unit 24, and the control device 25 are assembled and accommodated and are unitized as the getting-on-and-off authentication unit 20. In this example, the housing 21 may have the reading unit 22 which is partially exposed to the outer surface so that these constituent elements are accommodated therein. The housing 21 is provided on a body panel P (see FIGS. 2 and 3, and the like) of the vehicle V, for example.

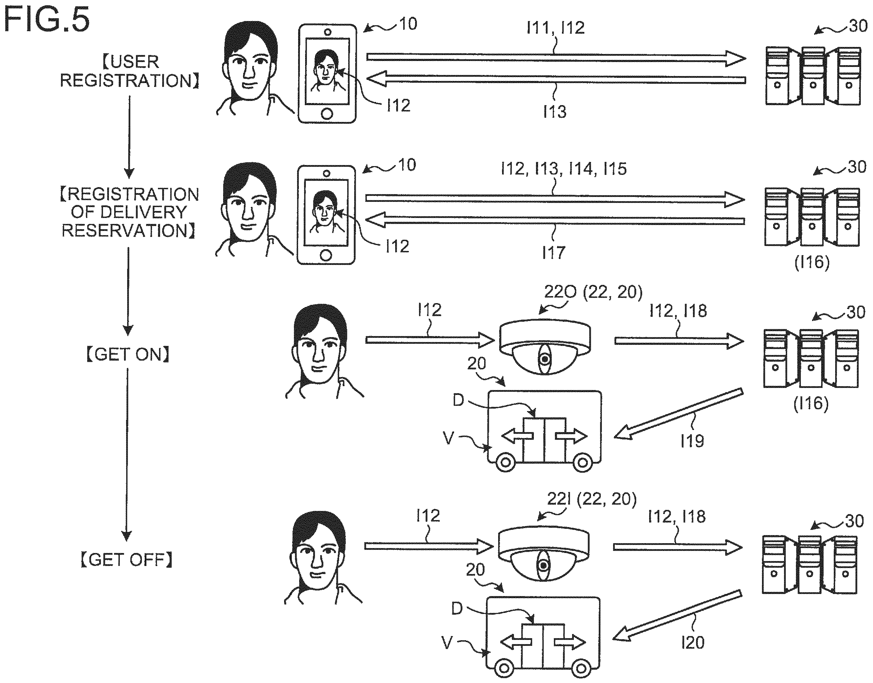

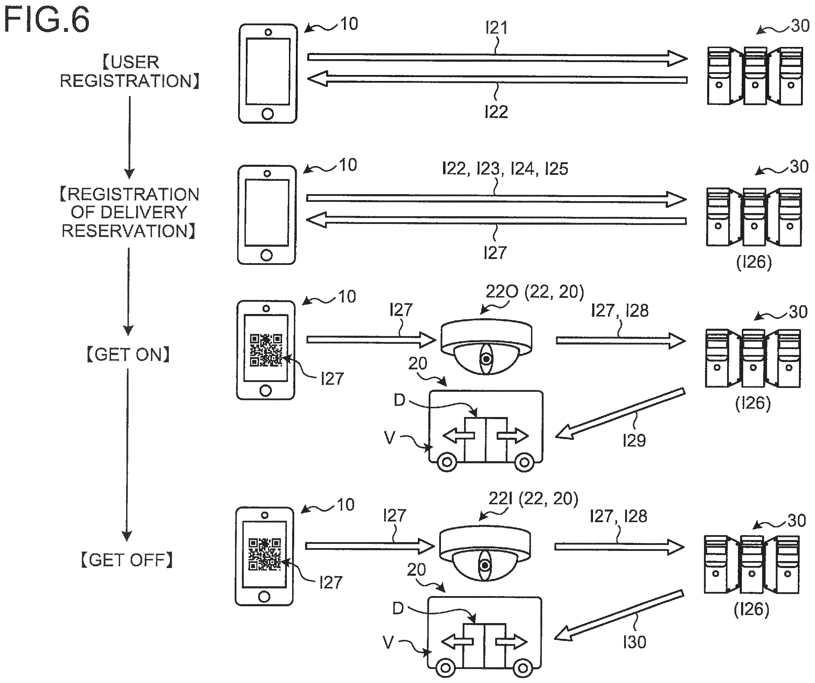

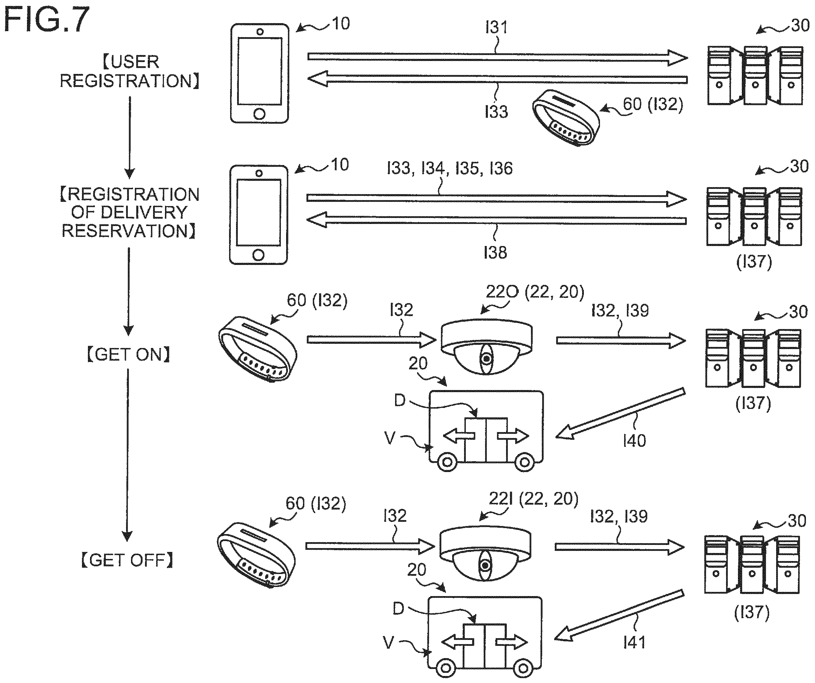

The reading unit 22 is provided in the vehicle V to reads identification information of a person riding on the vehicle V. Here, the person riding on the vehicle V is typically a user who gets on the vehicle V and moves to a desired destination. The identification information is information capable of identifying persons riding on the vehicle V. For example, the identification information may be biometric information capable of specifying persons (for example, see a specific example illustrated in FIG. 5 to be described later). The biometric information capable of specifying persons is information used for so-called biometric authentication. The biometric information may include various pieces of physiological information exhibited by a biological body (a person) such as, for example, fingerprint information, vein information, facial information, voiceprint information, or iris information. In this case, the reading unit 22 is configured as a camera, a sensor, a detector, or the like capable of detecting the biometric information as identification information. Moreover, the identification information may be electronic information such as, for example, two-dimensional code information or reservation code information electrically assigned during registration of delivery reservation to an electronic device (typically, the mobile terminal 10) possessed by a person who uses the vehicle V (for example, see a specific example illustrated in FIG. 6 to be described later). In this case, the reading unit 22 is configured as a device capable of reading electronic information as identification information from the electronic device by communicating with the electronic device such as the mobile terminal 10, for example. The reading unit 22 typically communicates with the electronic device such as the mobile terminal 10 by wireless communication such as a near-field wireless communication method. Moreover, the identification information may be identification ID information stored in advance in a medium such as, for example, an integrated circuit (IC) card or an authentication key tool physically assigned during user registration to a person who uses the vehicle V (for example, see a specific example illustrated in FIG. 7 to be described later). In this case, the reading unit 22 is configured as a reader that reads identification ID information from a medium such as the IC card or the authentication key tool. The identification ID information may be the same as user ID information, for example.

As illustrated in FIGS. 2 and 3, the reading unit 22 of the present embodiment includes a vehicle outside reading unit 220 and a vehicle inside reading unit 221. The vehicle outside reading unit 220 is provided in the body panel P of the vehicle V so as to be exposed to the outer side of the vehicle V. The vehicle outside reading unit 220 forms the reading unit 22 and is typically provided at a position at which it is possible to read the identification information of a personal user who gets on the vehicle V. The vehicle inside reading unit 221 is provided in the body panel P of the vehicle V so as to be exposed to the inner side of the vehicle V. The vehicle inside reading unit 221 forms the reading unit 22 and is typically provided at a position at which it is possible to read the identification information of a personal user who gets off the vehicle V. The vehicle outside reading unit 220 and the vehicle inside reading unit 221 are provided in the body panel P in a unitized state of being assembled into the housing 21. In the following description, the vehicle outside reading unit 220 and the vehicle inside reading unit 221 will be referred to simply as the "reading unit 22" when it is not necessary to distinguish both units particularly.

The GPS receiver 23 is provided in the vehicle V so as to acquire present position information indicating the present position of the vehicle V. The GPS receiver 23 acquires GPS information (latitude and longitude coordinates) of the vehicle V as the present position information by receiving radio waves transmitted from GPS satellites.

The communication unit 24 is a wireless communication function component mounted on the vehicle V. That is, the communication unit 24 is a communication module that wirelessly connects the vehicle V and the network N outside the vehicle V. The communication unit 24 transmits and receives information between the getting-on-and-off authentication unit 20 (the vehicle V) and devices connected to the network N. The communication unit 24 communicates with a communication device outside the vehicle V via the network N according to various wireless communication methods such as, for example, wide-area wireless communication or narrow-area wireless communication. Here, examples of the wide-area wireless communication method include radio (AM, FM), TV (UHF, 4K, 8K), TEL, GPS, and WiMAX (registered trademark). Moreover, examples of the narrow-area wireless communication method include ETC/DSRC, VICS (registered trademark), wireless LAN, and millimeter wave communication. The communication unit 24 of the present embodiment transmits and receives information to and from at least the mobile terminal 10, the external device 30, and the like connected to the network N via the network N. The getting-on-and-off authentication unit 20 can receive various cloud services from the external device 30 by communicating and cooperating with the external device 30 via the communication unit 24. The communication unit 24 of the present embodiment has a function of transmitting the identification information read by the reading unit 22 to the external device 30 via the network N. Moreover, the communication unit 24 of the present embodiment has a function of transmitting the present position information (GPS information) of the vehicle V acquired by the GPS receiver 23 to the external device 30 via the network N. Moreover, the communication unit 24 of the present embodiment has a function of receiving retrieval result information retrieved on the basis of the identification information by the external device 30. Here, the retrieval result information is information indicating a retrieval result retrieved by the external device 30 on the basis of the identification information transmitted to the external device 30 by the communication unit 24. The retrieval by the external device 30 and the retrieval result information will be described in more detail later. In this example, the communication unit 24 receives the retrieval result information from the external device 30 via the network N.

The control device 25 controls the respective units of the getting-on-and-off authentication unit 20 in an integrated manner. The control device 25 may be realized by an electronic control unit that controls the entire vehicle V in an integrated manner. The control device 25 executes various computation processes for realizing management of getting on and off of users on the vehicle V in cooperation with the external device 30. The control device 25 includes an electronic circuit mainly including a well-known microcomputer including a central computation processor such as CPU, MPU, ASIC, or FPGA, a ROM, a RAM, and an interface. The control device 25 is electrically connected to the reading unit 22, the GPS receiver 23, and the communication unit 24. The control device 25 can exchange various electrical signals such as various detection signals and driving signals for driving respective units with respective units.

Specifically, the control device 25 functionally and schematically includes an interface unit 25A, a storage unit 25B, and a processor 25C. The interface unit 25A, the storage unit 25B, and the processor 25C can exchange various pieces of information with various devices which are electrically connected to each other. The interface unit 25A is an interface for transmitting and receiving various pieces of information to and from respective units of the getting-on-and-off authentication unit 20 such as the reading unit 22, the GPS receiver 23, and the communication unit 24. Moreover, the interface unit 25A of the present embodiment can transmit and receive various pieces of information to and from an electronic control unit (ECU) 40 mounted on the vehicle V. Here, the ECU 40 is an electronic control unit that controls the entire vehicle V including a door device 50 and the like in an integrated manner. The door device 50 is a device that electrically opens and closes an entrance door D (see FIG. 2) of the vehicle V. The ECU 40 and the door device 50 may be configured as a part of the getting-on-and-off authentication system 1. In other words, the getting-on-and-off authentication system 1 may include the ECU 40 and the door device 50. The interface unit 25A has a function of communicating information with respective units via electric wires or the like and a function of wirelessly communicating information with respective units via a wireless communication unit or the like. The storage unit 25B is a vehicle-side storage device such as a memory. The storage unit 25B stores conditions and information necessary for various processes in the control device 25, various programs and applications executed by the control device 25, and control data and the like. For example, the storage unit 25B can temporarily store various pieces of information such as the identification information read by the reading unit 22, the present position information acquired by the GPS receiver 23, and the retrieval result information received by the communication unit 24. These pieces of information stored in the storage unit 25B are read by the processor 25C or the like as necessary. The processor 25C is a portion that executes various programs stored in the storage unit 25B on the basis of various input signals, outputs output signals to respective units, and executes various processes for realizing various functions when the programs run.

More specifically, the processor 25C functionally and schematically includes a reading processor 25a, a position information processor 25b, a communication processor 25c, a getting-on-and-off authorization processor 25d, and a door operation processor 25e.

The reading processor 25a is a portion having a function of controlling the reading unit 22 and executing an identification information reading process. The identification information reading process is a process of reading the identification information of a personal user of the vehicle V with the aid of the reading unit 22. The reading processor 25a stores the identification information read by the reading unit 22 in the storage unit 25B.

The position information processor 25b is a portion having a function of controlling the GPS receiver 23 and executing a position information acquiring process. The position information acquiring process is a process of acquiring the present position information of the vehicle V with the aid of the GPS receiver 23. The position information processor 25b stores the present position information of the vehicle V acquired by the GPS receiver 23 in the storage unit 25B in a time-series manner.

The communication processor 25c is a portion having a function of controlling the communication unit 24 and executing an in-vehicle-side communication process. The in-vehicle-side communication process is a process of transmitting and receiving various pieces of information between the getting-on-and-off authentication unit 20 (the vehicle V) and devices (the mobile terminal 10, the external device 30, and the like) connected to the network N with the aid of the communication unit 24. In this example, the communication processor 25c can execute a process of transmitting the identification information read by the reading unit 22 to the external device 30 with the aid of the communication unit 24. Moreover, the communication processor 25c can execute a process of transmitting the present position information acquired by the GPS receiver 23 to the external device 30 with the aid of the communication unit 24. Furthermore, the communication processor 25c can execute a process of receiving the retrieval result information retrieved on the basis of the identification information by the external device 30 with the aid of the communication unit 24.

The getting-on-and-off authorization processor 25d is a portion having a function of executing a getting-on-and-off authorization process. The getting-on-and-off authorization process is a process of authorizing a getting on and off of a person specified by the identification information read by the reading unit 22 of the vehicle V on the basis of the retrieval result information from the external device 30 received by the communication unit 24. In the following description, the identification information read by the reading unit 22 of the vehicle V is sometimes referred to as "read identification information" for the sake of convenience. As will be described later, the getting-on-and-off authorization processor 25d authorizes a getting on and off of a person on the vehicle V when the person specified by the read identification information is authenticated. On the other hand, the getting-on-and-off authorization processor 25d does not authorize a getting on and off of a person on the vehicle V when the person specified by the read identification information is not authenticated.

The door operation processor 25e is a portion having a function of controlling the door device 50 with the aid of the ECU 40 and executing a door opening process. The door opening process is a process of opening the door D of the vehicle V with the aid of the door device 50 via the control of the ECU 40. The door operation processor 25e executes a door opening process to open the door D when a getting on and off of a person specified by the read identification information is authorized by the getting-on-and-off authorization processor 25d. On the other hand, the door operation processor 25e does not execute the door opening process but maintains the door D in a closed state when a getting on and off of a person specified by the read identification information is not authorized by the getting-on-and-off authorization processor 25d.

Next, the external device 30 will be described. The external device 30 forms a cloud service device (a cloud server) mounted on the network N outside the vehicle V. The external device 30 cooperates with the getting-on-and-off authentication unit 20 to execute various computation processes for realizing management of getting on and off of users on the vehicle V. Typically, the external device 30 realizes management of getting on and off of users on a plurality of vehicles V. The external device 30 includes an electronic circuit mainly including a well-known microcomputer including a central computation processor such as CPU, MPU, ASIC, or FPGA, a ROM, a RAM, and an interface. The external device 30 can transmit and receive information to and from the mobile terminal 10 and the getting-on-and-off authentication unit 20 (the vehicle V) via the network N. The external device 30 can be formed by installing applications that realize various processes to be described later on a computer system such as a known PC or workstation.

Specifically, the external device 30 functionally and schematically includes an interface unit 30A as an external-device-side communication unit, a storage unit 30B, and a processor 30C. The interface unit 30A, the storage unit 30B, and the processor 30C can exchange various pieces of information with various devices which are electrically connected to each other. The interface unit 30A is an interface for transmitting and receiving various pieces of information to and from the network N or the like. The interface unit 30A has a function of communicating information with the network N via electric wires or the like and a function of wirelessly communicating information with the network N via a wireless communication unit or the like. The storage unit 30B is an external-device-side storage device. The storage unit 30B can store a larger volume of information than the storage unit 25B, for example. The storage unit 30B may be a storage device having a relatively large capacity such as a hard disk, a solid state drive (SSD), or an optical disc or a semiconductor memory capable of rewriting data such as a RAM, a flash memory, or a non-volatile static random access memory (NVSRAM). The storage unit 30B stores conditions and information necessary for various processes in the external device 30, various programs and applications executed by the external device 30, and control data and the like. Moreover, the storage unit 30B can temporarily store various pieces of information such as the identification information and the present position information received by the interface unit 30A. These pieces of information stored in the storage unit 30B are read by the processor 30C or the like as necessary. The processor 30C is a portion that executes various programs stored in the storage unit 30B on the basis of various input signals and executes various processes for realizing various functions when the programs run.

More specifically, the storage unit 30B includes a user information database (hereinafter referred to briefly as a "user information DB") 30a, a reservation information database (hereinafter referred to briefly as a "reservation information DB") 30b.

The user information DB 30a is a portion that stores user information of a user who uses the vehicle V. The user information may include, for example, attribute information indicating an attribute of a personal user, user ID information assigned to a personal user during registration of users, password information of a personal user set during registration of users, address information of the mobile terminal 10 possessed by a personal user, address information indicating the address/residence of a personal user, demand information indicating the demands of a personal user, and payment information indicating a payment means of a personal user. Moreover, the user information may include biometric information as identification information when the biometric information is used as the identification information of a personal user, for example. Furthermore, the user information may include identification ID information as identification information when the identification ID information stored in advance in a medium assigned during registration of users is used as the identification information of a personal user, for example. The user information is input to the external device 30 during registration of users by a user as will be described later, for example, and is registered in the user information DB 30a by the processor 30C.

The reservation information DB 30b is a portion that stores reservation information related to reservations of the vehicle V. The reservation information may include, for example, reserving person information for specifying a reserving person, reserved getting-on-and-off position information for specifying a reserved getting-on-and-off position, reserved getting-on-and-off time information for specifying a reserved getting-on-and-off time, and reserved vehicle information for specifying a reserved vehicle V. The reservation information is input to the external device 30 during registration of delivery reservation by users as will be described later, for example, and is processed by the processor 30C and is registered in the reservation information DB 30b.

The processor 30C functionally and schematically includes a communication processor 30c, a registration processor 30d, a reservation processor 30e, a retrieval processor 30f, and an authentication processor 30g.

The communication processor 30c is a portion having a function of controlling the interface unit 30A and executing an external-side communication process. The external-side communication process is a process of transmitting and receiving various pieces of information between the external device 30 and devices (the mobile terminal 10, the getting-on-and-off authentication unit 20, and the like) connected to the network N with the aid of the interface unit 30A. The communication processor 30c transmits and receives various pieces of information with the communication unit 24 of the getting-on-and-off authentication unit 20 connected to the network N with the aid of the interface unit 30A, for example. In this example, the communication processor 30c can execute a process of receiving the identification information transmitted by the communication unit 24 with the aid of the interface unit 30A. In the following description, the identification information transmitted to the external device 30 by the communication unit 24 and received by the interface unit 30A is sometimes referred to as "received identification information" for the sake of convenience. In other words, the received identification information can be referred to as read identification information which has been read by the reading unit 22 of the vehicle V and has been transmitted by the communication unit 24 and received by the interface unit 30A. Moreover, the communication processor 30c can execute a process of receiving the present position information transmitted by the communication unit 24 with the aid of the interface unit 30A. In the following description, the present position information transmitted to the external device 30 by the communication unit 24 and received by the interface unit 30A is sometimes referred to as "received present position information" for the sake of convenience. Moreover, the communication processor 30c can execute a process of transmitting the retrieval result information generated by the retrieval processor 30f and the authentication processor 30g to the communication unit 24 with the aid of the interface unit 30A. Furthermore, the communication processor 30c can execute a process of transmitting electronic information as identification information to the electronic device such as the mobile terminal 10 with the aid of the interface unit 30A when the electronic information assigned during registration of delivery reservation is used as the identification information of a personal user.

The registration processor 30d is a portion having a function of executing a registration process. The registration process is a process of storing and registering various pieces of information such as the user information input from an input device in the storage unit 30B including the user information DB 30a and the like. Here, the input device is a device such as various terminal devices, a touch pad, a mouse, and a keyboard connected directly, or via the network N, to the external device 30. An electronic device such as the mobile terminal 10 may be used as the input device. For example, an operator or the like of a business that uses the vehicle V inputs vehicle information of the vehicle V available to users to the external device 30 via the input device. In response to this, the registration processor 30d can execute a process of registering the input vehicle information to the storage unit 30B. Moreover, for example, a person who wishes to use the vehicle V or an operator of a business that uses the vehicle V inputs the user information to the external device 30 via the input device as a user registration. In response to this, the registration processor 30d can execute a process of registering the input user information in the user information DB 30a. An operator or the like of a business that uses the vehicle V assigns a medium such as an IC card or an authentication key tool in which identification ID information as identification information is stored to a user himself or herself when the identification ID information stored in advance in a medium is used as the identification information of a personal user.

The reservation processor 30e is a portion having a function of executing a reservation process. The reservation process is a process of selecting a vehicle V to be reserved for delivery on the basis of various pieces of information input from an input device and storing and registering reservation information related to the selected vehicle V in the reservation information DB 30b. For example, a user who wishes to use the vehicle V inputs information such as user ID information, password information, identification information, desired getting-on-and-off position information, and desired riding time information to the external device 30 via the input device as registration of delivery reservation. In response to this, the reservation processor 30e can execute a process of selecting a vehicle V satisfying the demands from available vehicles V on the basis of information such as the input desired getting-on-and-off position and the desired riding time. Moreover, the reservation processor 30e can execute a process of reading the user information corresponding to the input user ID information from the user information DB 30a and registering the user information and the reservation information of the selected vehicle V in the reservation information DB 30b in correlation with each other. Furthermore, the reservation processor 30e can execute a process of generating electronic information and registering the same in the reservation information DB 30b as reservation information when the electronic information assigned during registration of delivery reservation is used as the identification information of a personal user. In this case, the communication processor 30c transmits the electronic information as the identification information to an electronic device such as the mobile terminal 10 possessed by the user with the aid of the interface unit 30A. In the mobile terminal 10, the communication processor 10a executes a process of receiving the electronic information as the identification information transmitted by the interface unit 30A with the aid of the interface unit 10A. The electronic information as the identification information received by the interface unit 10A is stored in the storage unit 10B.

The retrieval processor 30f is a portion having a function of executing a retrieval process. The retrieval process is a process of retrieving various pieces of information on the basis of the received identification information. In this example, the retrieval processor 30f retrieves target vehicle reservation information corresponding to the received identification information from pieces of reservation information registered in the reservation information DB 30b. Here, the target vehicle reservation information is the reservation information registered in advance in the reservation information DB 30b of the external device 30 and is reservation information related to reservation of a transmitting vehicle V that has transmitted the received identification information. The target vehicle reservation information may be specified on the basis of vehicle identification information (vehicle ID information) which is assigned in advance to respective vehicles V and can specify the vehicle V. The target vehicle reservation information forms the retrieval result information indicating the retrieval result retrieved on the basis of the received identification information by the external device 30.

The authentication processor 30g is a portion having a function of executing an authentication process. The authentication process is a process of authenticating the received identification information. In this example, the authentication processor 30g can execute a process of authenticating the received identification information on the basis of at least the received identification information and the target vehicle reservation information retrieved by the retrieval processor 30f on the basis of the received identification information. More specifically, the authentication processor 30g of the present embodiment authenticates the received identification information on the basis of the received present position information in addition to the received identification information and the target vehicle reservation information. That is, the authentication processor 30g of the present embodiment authenticates the received identification information on the basis of the received identification information, the received present position information, and the target vehicle reservation information and generates authentication result information on the basis of the authentication result of the received identification information.

Specifically, the authentication processor 30g retrieves a person specified by the received identification information and a person specified by the reserving person information included in the target vehicle reservation information. Furthermore, the authentication processor 30g retrieves a present position of a vehicle V specified by the received present position information and a getting-on-and-off position specified by the reserved getting-on-and-off position information included in the target vehicle reservation information. Moreover, the authentication processor 30g generates authentication result information indicating that a person specified by the received identification information is authenticated when Condition (11) is satisfied.

Condition (11); a person specified by the received identification information matches a person specified by the reserving person information, and the present position of a vehicle V specified by the received present position information matches the getting-on-and-off position specified by the reserved getting-on-and-off position information.

On the other hand, the authentication processor 30g generates authentication result information indicating that a person specified by the received identification information is not authenticated when Condition (12) or (13) is satisfied.

Condition (12); a person specified by the received identification information does not match a person specified by the reserving person information.

Condition (13); the present position of a vehicle V specified by the received present position information does not match the getting-on-and-off position specified by the reserved getting-on-and-off position information.

The authentication result information of the present embodiment forms the retrieval result information indicating the retrieval result retrieved on the basis of the received identification information by the external device 30 together with the target vehicle reservation information. That is, the retrieval result information of the present embodiment includes the target vehicle reservation information and the authentication result information. The communication processor 30c transmits the retrieval result information including the authentication result information to the communication unit 24 with the aid of the interface unit 30A. The getting-on-and-off authorization processor 25d authorizes a getting on and off of a person specified by the read identification information on the basis of the authentication result information included in the retrieval result information received by the communication unit 24. That is, the getting-on-and-off authorization processor 25d authorizes a getting on and off of the person on the basis of the authentication result information indicating that the person specified by the received identification information is authorized. On the other hand, the getting-on-and-off authorization processor 25d does not authorize a getting on and off of the person on the basis of the authentication result information indicating that the person specified by the received identification information is not authorized.

The authentication processor 30g may execute a process of authenticating the received identification information by taking the reserved getting-on-and-off time information or the like included in the target vehicle reservation information into consideration.

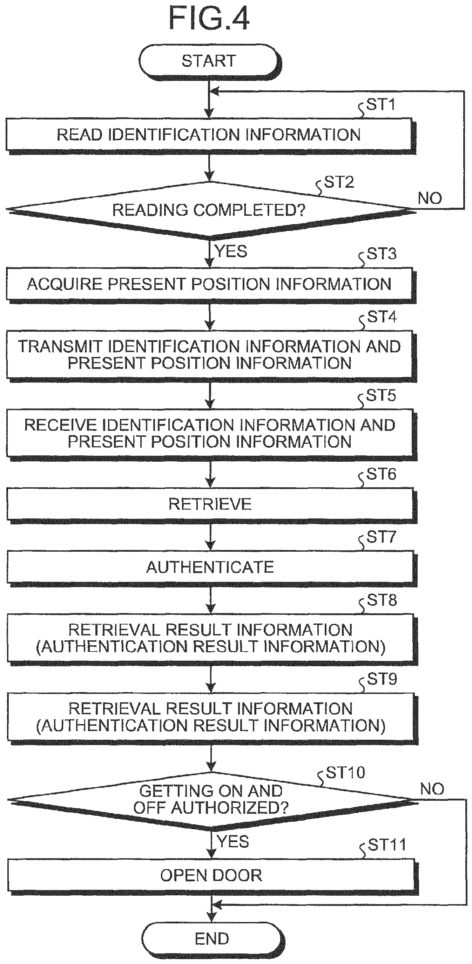

Next, an overview of an example of a getting-on-and-off authentication method will be described with reference to the flowchart of FIG. 4, and a specific example will be described with reference to FIGS. 5, 6, and 7. In the following description, FIG. 1 and the like are also referenced appropriately. The getting-on-and-off authentication method described later is executed by the getting-on-and-off authentication system 1. In FIG. 4, processes when user registration and registration of delivery reservation have been completed already and a user actually gets on and off the vehicle V will be described mainly. That is, it is assumed that the user information and the reservation information are registered in advance in the user information DB 30a and the reservation information DB 30b, respectively, in correlation with each other, by the registration processor 30d and the reservation processor 30e.

First, the reading processor 25a of the getting-on-and-off authentication unit 20 controls the reading unit 22 and executes an identification information reading process (Step ST1). The reading processor 25a reads the identification information of the personal user of the vehicle V with the aid of the reading unit 22 by executing the identification information reading process.

Subsequently, the reading processor 25a determines whether reading of the identification information has been completed (Step ST2). When it is determined that reading of the identification information is not completed (Step ST2: No), the flow returns to Step ST1 and the reading processor 25a executes the processes of Step ST1 and subsequent steps repeatedly. When it is determined that reading of the identification information is completed (Step ST2: Yes), the reading processor 25a proceeds to Step ST3.

In the process of Step ST3, the position information processor 25b of the getting-on-and-off authentication unit 20 controls the GPS receiver 23 and executes a position information acquiring process (Step ST3). The position information processor 25b acquires the present position information of the vehicle V by executing the position information acquiring process.

Subsequently, the communication processor 25c of the getting-on-and-off authentication unit 20 controls the communication unit 24 and executes an in-vehicle-side communication process (Step ST4). The communication processor 25c transmits the identification information (the read identification information) read in Step ST1 and the present position information acquired in Step ST3 to the external device 30 with the aid of the communication unit 24 by executing the in-vehicle-side communication process.

Subsequently, the communication processor 30c of the external device 30 controls the interface unit 30A and executes an external-side communication process (Step ST5). The communication processor 30c receives the identification information and the present position information transmitted in Step ST4 with the aid of the interface unit 30A by executing the external-side communication process.

Subsequently, the retrieval processor 30f of the external device 30 executes a retrieval process (Step ST6). The retrieval processor 30f searches the target vehicle reservation information of the transmitting vehicle V that has transmitted the identification information on the basis of the identification information (the received identification information) received in Step ST5 from pieces of reservation information registered in the reservation information DB 30b by executing the retrieval process.

Subsequently, the authentication processor 30g of the external device 30 executes an authentication process (Step ST7). The authentication processor 30g authenticates the received identification information on the basis of the received identification information received in Step ST5, the received present position information received in Step ST5, and the target vehicle reservation information retrieved in Step ST6 to generate authentication result information by executing the authentication process.

Subsequently, the communication processor 30c controls the interface unit 30A and executes an external-side communication process (Step ST8). The communication processor 30c transmits the retrieval result information including the authentication result information generated in Step ST7 from the interface unit 30A to the getting-on-and-off authentication unit 20 by executing the external-side communication process.

Subsequently, the communication processor 25c controls the communication unit 24 and executes an in-vehicle-side communication process (Step ST9). The communication processor 25c receives the retrieval result information including the authentication result information transmitted in Step ST8 with the aid of the communication unit 24 by executing the in-vehicle-side communication process.

Subsequently, the getting-on-and-off authorization processor 25d of the getting-on-and-off authentication unit 20 executes a getting-on-and-off authorization process (Step ST10). The getting-on-and-off authorization processor 25d determines whether a getting on and off of a person specified by the read identification information read in Step ST1 is authorized on the basis of the authentication result information included in the retrieval result information received in Step ST9 by executing the getting-on-and-off authorization process. When the authentication result information included in the retrieval result information received in Step ST9 is authentication result information indicating that a person specified by the received identification information is authenticated, the getting-on-and-off authorization processor 25d determines that a getting on and off of the person is authorized (Step ST10: Yes). When the authentication result information included in the retrieval result information received in Step ST9 is authentication result information indicating that a person specified by the received identification information is not authenticated, the getting-on-and-off authorization processor 25d determines that a getting on and off of the person is not authorized (Step ST10: No).

When it is determined in Step ST10 that a getting on and off of a person specified by the read identification information is authorized (Step ST10: Yes), the door operation processor 25e of the getting-on-and-off authentication unit 20 controls the door device 50 and executes a door opening process (Step ST11). The door operation processor 25e opens the door D by executing the door opening process and ends a process related to the getting-on-and-off authentication method.

When it is determined in Step ST10 that a getting on and off of a person specified by the read identification information is not authorized (Step ST10: No), the door operation processor 25e does not execute a door opening process and ends the process related to the getting-on-and-off authentication method while maintaining the door D in a closed state. In this case, the mobile terminal 10 or the getting-on-and-off authentication unit 20 may output a message indicating that a getting on and off is not authorized with the aid of various output devices (for example, a speaker, a display device, and the like). Moreover, the getting-on-and-off authentication unit 20 may output a notification that a getting-on-and-off is not authorized to the external device 30 via the communication unit 24 or the like. Upon receiving the notification that a getting on and off is not authorized, the external device 30 may communicate with the getting-on-and-off authentication unit 20 via the interface unit 30A or the like, for example. In this way, the external device 30 can allow a user who is not authorized to get on and off to make conversation with an operator of the external device 30 via a camera, a microphone, a speaker, and the like mounted on the vehicle V and connected to the ECU 40, for example. The getting-on-and-off authentication system 1 may perform various processes such as various guides and countermeasures and billing of an additional rental fee with respect to a user who is not authorized to get off, for example. The same processes may be performed with respect to a user who is not authorized to get on.

Next, a specific example when biometric information is used as the identification information of a personal user will be described with reference to FIG. 5.

First, a personal user who wishes to use the vehicle V inputs user information 111 to the external device 30 via an input device such as the mobile terminal 10 as user registration. In response to this, the external device 30 registers the input user information I11 in the user information DB 30a. In this case, the user acquires biometric information 112 such as fingerprint information, vein information, facial information, voiceprint information, or iris information of the user himself or herself using the mobile terminal 10 or another device and also inputs the biometric information 112 to the external device 30 as the identification information of the personal user. In response to this, the external device 30 also registers the input biometric information 112 in the user information DB 30a as the user information I11. The external device 30 transmits user ID information 113 assigned to the personal user during user registration to the mobile terminal 10 possessed by the personal user. The personal user may store the user ID information 113 transmitted from the external device 30 personally and may store the same in the storage unit 10B of the mobile terminal 10.

Subsequently, the personal user who wishes to use the vehicle V inputs information such as the biometric information 112 registered during user registration in the external device 30, the user ID information 113, the desired getting-on-and-off position information 114, and the desired getting-on-and-off time information 115 via an input device such as the mobile terminal 10 as registration of delivery reservation. In response to this, the external device 30 selects a vehicle V satisfying the demands from available vehicles V on the basis of the input biometric information 112, user ID information 113, desired getting-on-and-off position information 114, and desired riding time information 115. The external device 30 reads the user information I11 corresponding to the input user ID information 113 from the user information DB 30a and registers the user information 111 in the reservation information DB 30b in correlation with the reservation information 116 of the selected vehicle V. After that, the external device 30 transmits reservation completion information 117 indicating that registration of delivery reservation is completed to the mobile terminal 10 possessed by the personal user.

Subsequently, the personal user who has registered delivery reservation for the vehicle V causes the vehicle outside reading unit 220 of the getting-on-and-off authentication unit 20 of the vehicle V to read the biometric information 112 as the identification information of the personal user when getting on the vehicle V delivered at the desired pick-up position. The getting-on-and-off authentication unit 20 transmits the read biometric information 112 and the present position information 118 of the vehicle V to the external device 30. The external device 30 retrieves reservation information (corresponding to the target vehicle reservation information) 116 of the vehicle V having transmitted the biometric information 112 on the basis of the received biometric information 112 from a plurality of pieces of reservation information registered in the reservation information DB 30b. After that, the external device 30 authenticates the biometric information 112 on the basis of the retrieved reservation information 116, the biometric information 112, and the present position information 118. More specifically, the external device 30 retrieves a person specified by the biometric information 112 and a person specified by the reserving person information included in the reservation information 116. Furthermore, the external device 30 retrieves the present position of the vehicle V specified by the present position information 118 and a pick-up position specified by the reserved getting-on-and-off position information included in the reservation information 116. The external device 30 generates authentication result information 119 indicating that a person specified by the biometric information 112 is authenticated and transmits the authentication result information 119 to the getting-on-and-off authentication unit 20 when Condition (11) is satisfied. The getting-on-and-off authentication unit 20 authorizes getting-on of the personal user specified by the biometric information 112 on the basis of the authentication result information 119 and opens the door D. In this case, the mobile terminal 10 or the getting-on-and-off authentication unit 20 may output a message indicating that getting-on is authorized with the aid of various output devices (for example, a speaker, a display device, and the like), for example. On the other hand, the external device 30 generates authentication result information (not illustrated) indicating that a person specified by the biometric information 112 is not authenticated and transmits the authentication result information to the getting-on-and-off authentication unit 20 when Condition (12) or (13) is satisfied. The getting-on-and-off authentication unit 20 does not authorize getting-on of a personal user specified by the biometric information 112 on the basis of the authentication result information and maintains the door D in the closed state. In this case, as described above, the mobile terminal 10 or the getting-on-and-off authentication unit 20 may output a message indicating that getting-on is not authorized with the aid of various output devices (for example, a speaker, a display device, and the like). Moreover, as described above, the getting-on-and-off authentication system 1 may communicate with the getting-on-and-off authentication unit 20 and the external device 30 and perform various processes with respect to a user who is not authorized to get on.

Subsequently, the personal user having gotten on the vehicle V causes the vehicle inside reading unit 221 of the getting-on-and-off authentication unit 20 of the vehicle V to read the biometric information 112 as the identification information of the personal user when getting off the vehicle V at a desired drop-off position. The getting-on-and-off authentication unit 20 transmits the read biometric information 112 and the present position information 118 of the vehicle V to the external device 30. The external device 30 retrieves reservation information (corresponding to the target vehicle reservation information) 116 of the vehicle V having transmitted the biometric information 112 on the basis of the received biometric information 112 from a plurality of pieces of reservation information registered in the reservation information DB 30b. After that, the external device 30 authenticates the biometric information 112 on the basis of the retrieved reservation information 116, the biometric information 112, and the present position information 118. More specifically, the external device 30 retrieves a person specified by the biometric information 112 and a person specified by the reserving person information included in the reservation information 116. Furthermore, the external device 30 retrieves a present position of the vehicle V specified by the present position information 118 and a drop-off position specified by the reserved getting-on-and-off position information included in the reservation information 116. The external device 30 generates authentication result information 120 indicating that the person specified by the biometric information 112 is authenticated when Condition (11) is satisfied and transmits the authentication result information 120 to the getting-on-and-off authentication unit 20. The getting-on-and-off authentication unit 20 authorizes getting-on of the personal user specified by the biometric information 112 on the basis of the authentication result information 120 and opens the door D. In this case, the mobile terminal 10 or the getting-on-and-off authentication unit 20 may output a message indicating that getting-off is authorized with the aid of various output devices (for example, a speaker, a display device, and the like), for example. On the other hand, the external device 30 generates authentication result information (not illustrated) indicating that a person specified by the biometric information 112 is not authenticated when Condition (12) or (13) is satisfied and transmits the authentication result information to the getting-on-and-off authentication unit 20. The getting-on-and-off authentication unit 20 does not authorize getting-on of the personal user specified by the biometric information 112 on the basis of the authentication result information and maintains the door D in the closed state. In this case, as described above, the mobile terminal 10 or the getting-on-and-off authentication unit 20 may output a message indicating a getting-off is not authorized with the aid of various output devices (for example, a speaker, a display device, and the like). Moreover, as described above, the getting-on-and-off authentication system 1 may communicate with the getting-on-and-off authentication unit 20 and the external device 30 and perform various processes with respect to a user who is not authorized to get off.

Next, a specific example when electronic information such as two-dimensional code information or reservation code information assigned electronically during registration of delivery reservation is used as the identification information of a personal user will be described with reference to FIG. 6. In the following description, redundant description overlapping the description of FIG. 5 will be omitted as much as possible (the same is true to FIG. 7 to be described later).

First, a personal user who wishes to use the vehicle V inputs the user information I21 to the external device 30 via an input device such as the mobile terminal 10 as user registration. In response to this, the external device 30 registers the input user information I21 in the user information DB 30a. The external device 30 transmits the user ID information I22 assigned to the personal user during user registration to the mobile terminal 10 possessed by the personal user.

Subsequently, the personal user who wishes to use the vehicle V inputs information such as the user ID information I22, the password information 123 set as the user information I21 during user registration, the desired getting-on-and-off position information I24, and the desired getting-on-and-off time information I25 to the external device 30 via an input device such as the mobile terminal 10 as registration of delivery reservation. In response to this, the external device 30 selects a vehicle V satisfying the demands from available vehicles V on the basis of the input user ID information I22, password information I23, desired getting-on-and-off position information I24, and desired getting-on-and-off time information I25. The external device 30 reads the user information I21 corresponding to the input user ID information I22 from the user information DB 30a and registers the user information I21 in the reservation information DB 30b in correlation with the reservation information I26 of the selected vehicle V. In this case, the external device 30 generates electronic information I27 such as two-dimensional code information or reservation code information as the identification information. The external device 30 registers the generated electronic information I27 in the reservation information DB 30b as the reservation information I26 and transmits the electronic information I27 to the mobile terminal 10 possessed by the personal user. The mobile terminal 10 stores the received electronic information I27 in the storage unit 10B.

Subsequently, the personal user who has registered delivery reservation for the vehicle V causes the vehicle outside reading unit 220 of the getting-on-and-off authentication unit 20 of the vehicle V to read the electronic information I27 stored in the mobile terminal 10 as the identification information of the personal user when getting on the vehicle V delivered at the desired pick-up position. In this case, the vehicle outside reading unit 22O starts reading the electronic information I27 stored in the mobile terminal 10 when entering a communication region of the mobile terminal 10 in a state where a predetermined application or the like runs. The getting-on-and-off authentication unit 20 transmits the read electronic information I27 and the present position information I28 of the vehicle V to the external device 30. The external device 30 retrieves the reservation information (corresponding to the target vehicle reservation information) I26 of the vehicle V having transmitted the electronic information I27 on the basis of the received electronic information I27 from a plurality of pieces of reservation information registered in the reservation information DB 30b. After that, the external device 30 authenticates the electronic information I27 on the basis of the retrieved reservation information I26, the electronic information I27, and the present position information I28. The external device 30 generates the authentication result information I29 indicating that a person specified by the electronic information I27 is authenticated when Condition (11) is satisfied and transmits the authentication result information 129 to the getting-on-and-off authentication unit 20. The getting-on-and-off authentication unit 20 authorizes getting-on of the personal user specified by the electronic information I27 on the basis of the authentication result information I29 and opens the door D. On the other hand, the external device 30 generates authentication result information (not illustrated) indicating that the person specified by the electronic information I27 is not authenticated when Condition (12) or (13) is satisfied and transmits the authentication result information to the getting-on-and-off authentication unit 20. The getting-on-and-off authentication unit 20 does not authorize getting-on of the personal user specified by the electronic information I27 on the basis of the authentication result information and maintains the door D in the closed state.

Subsequently, the personal user having gotten on the vehicle V causes the vehicle inside reading unit 22I of the getting-on-and-off authentication unit 20 of the vehicle V to read the electronic information I27 as the identification information of the personal user when getting off the vehicle V at the desired drop-off position. The getting-on-and-off authentication unit 20 transmits the read electronic information I27 and the present position information I28 of the vehicle V to the external device 30. The external device 30 retrieves the reservation information (corresponding to the target vehicle reservation information) I26 of the vehicle V having transmitted the electronic information I27 on the basis of the received electronic information I27 from a plurality of pieces of reservation information registered in the reservation information DB 30b. After that, the external device 30 authenticates the electronic information I27 on the basis of the retrieved reservation information I26, the electronic information I27, and the present position information I28. The external device 30 generates the authentication result information I30 indicating that the person specified by the electronic information I27 is authenticated when Condition (11) is satisfied and transmits the authentication result information I30 to the getting-on-and-off authentication unit 20. The getting-on-and-off authentication unit 20 authorizes getting-off of the personal user specified by the electronic information I27 on the basis of the authentication result information I30 and opens the door D. On the other hand, the external device 30 generates authentication result information (not illustrated) indicating that the person specified by the electronic information I27 is not authenticated when Condition (12) or (13) is satisfied and transmits the authentication result information to the getting-on-and-off authentication unit 20. The getting-on-and-off authentication unit 20 does not authorize getting-off of the personal user specified by the electronic information I27 on the basis of the authentication result information and maintains the door D in the closed state.

Next, a specific example when the identification ID information stored in a medium such as an IC card or an authentication key tool physically assigned during user registration as the identification information of a personal user will be described with reference to FIG. 7.

First, a personal user who wishes to use the vehicle V inputs the user information 131 to the external device 30 via an input device such as the mobile terminal 10 as user registration. In response to this, the external device 30 registers the input user information 131 in the user information DB 30a. The external device 30 generates the identification ID information I32 as the identification information of the personal user and registers the identification ID information I32 in the user information DB 30a as the user information I31. An operator of a business that uses the vehicle V assigns a medium 60 such as an IC card or an authentication key tool, in which the identification ID information I32 is stored, to a user himself or herself. The external device 30 transmits the user ID information I33 assigned to the personal user during user registration to the mobile terminal 10 possessed by the personal user.

Subsequently, the personal user who wishes to use the vehicle V inputs information such as the user ID information I33, the password information I34 set as the user information I31 during user registration, the desired getting-on-and-off position information I35, and the desired getting-on-and-off time information I36 to the external device 30 via an input device such as the mobile terminal 10 as registration of delivery reservation. In response to this, the external device 30 selects the vehicle V satisfying the demands from available vehicles V on the basis of the input user ID information I33, password information I34, desired getting-on-and-off position information I35, and desired getting-on-and-off time information I36. The external device 30 reads the user information I31 corresponding to the input user ID information I33 from the user information DB 30a and registers the user information I31 in the reservation information DB 30b in correlation with the reservation information I37 of the selected vehicle V. After that, the external device 30 transmits the reservation completion information I38 indicating that registration of delivery reservation is completed to the mobile terminal 10 possessed by the personal user.

Subsequently, the personal user who has registered delivery reservation for the vehicle V causes the vehicle outside reading unit 22O of the getting-on-and-off authentication unit 20 of the vehicle V to read the identification ID information I32 stored in the medium 60 as the identification information of the personal user when getting on the vehicle V delivered at the desired pick-up position. In this case, the vehicle outside reading unit 22O starts reading the identification ID information I32 stored in the medium 60 when entering a communication region of the medium 60. The getting-on-and-off authentication unit 20 transmits the read identification ID information I32 and the present position information I39 of the vehicle V to the external device 30. The external device 30 retrieves reservation information (corresponding to the target vehicle reservation information) I37 of the vehicle V having transmitted the identification ID information I32 on the basis of the received identification ID information I32 from a plurality of pieces of reservation information registered in the reservation information DB 30b. After that, the external device 30 authenticates the identification ID information I32 on the basis of the retrieved reservation information I37, the identification ID information I32, and the present position information I39. The external device 30 generates the authentication result information I40 indicating that a person specified by the identification ID information I32 is authenticated when Condition (11) is satisfied and transmits the authentication result information I40 to the getting-on-and-off authentication unit 20. The getting-on-and-off authentication unit 20 authorizes getting-on of the personal user specified by the identification ID information I32 on the basis of the authentication result information I40 and opens the door D. On the other hand, the external device 30 generates authentication result information (not illustrated) indicating that the person specified by the identification ID information I32 is not authenticated when Condition (12) or (13) is satisfied and transmits the authentication result information to the getting-on-and-off authentication unit 20. The getting-on-and-off authentication unit 20 does not authorize getting-on of the personal user specified by the identification ID information I32 on the basis of the authentication result information and maintains the door D in the closed state.

Subsequently, the personal user having gotten on the vehicle V causes the vehicle inside reading unit 22I of the getting-on-and-off authentication unit 20 of the vehicle V to read the identification ID information I32 stored in the medium 60 as the identification information of the personal user when getting off the vehicle V at the desired drop-off position. The getting-on-and-off authentication unit 20 transmits the read identification ID information I32 and the present position information I39 of the vehicle V to the external device 30. The external device 30 retrieves reservation information (corresponding to the target vehicle reservation information) I37 of the vehicle V having transmitted the identification ID information I32 on the basis of the received identification ID information I32 from a plurality of pieces of reservation information registered in the reservation information DB 30b. After that, the external device 30 authenticates the identification ID information I32 on the basis of the retrieved reservation information I37, the identification ID information I32, and the present position information I39. The external device 30 generates the authentication result information I41 indicating that the person specified by the identification ID information I32 is authenticated when Condition (11) is satisfied and transmits the authentication result information I41 to the getting-on-and-off authentication unit 20. The getting-on-and-off authentication unit 20 authorizes getting-off of the personal user specified by the identification ID information I32 on the basis of the authentication result information I41 and opens the door D. On the other hand, the external device 30 generates authentication result information (not illustrated) indicating that the person specified by the identification ID information I32 is not authenticated when Condition (12) or (13) is satisfied and transmits the authentication result information to the getting-on-and-off authentication unit 20. The getting-on-and-off authentication unit 20 does not authorize getting-off of the personal user specified by the identification ID information I32 on the basis of the authentication result information and maintains the door D in the closed state.

The getting-on-and-off authentication unit 20 and the getting-on-and-off authentication system 1 described above transmit the identification information of a person read by the reading unit 22 provided in the vehicle V to the external device 30 outside the vehicle V with the aid of the communication unit 24. The getting-on-and-off authentication unit 20 receives the retrieval result information retrieved on the basis of the identification information by the external device 30 with the aid of the communication unit 24. The getting-on-and-off authentication unit 20 executes a process of authorizing a getting-on-and-off of the person specified by the identification information on the vehicle V with the aid of the getting-on-and-off authorization processor 25d on the basis of the retrieval result information received by the communication unit 24. As a result, the getting-on-and-off authentication unit 20 and the getting-on-and-off authentication system 1 can manage getting on and off of users on the vehicle V appropriately.

In this way, since the getting-on-and-off authentication unit 20 and the getting-on-and-off authentication system 1 can grasp getting on and off of users on the respective vehicles V accurately, it is possible to suppress getting on and off of unexpected users from occurring. As a result, the getting-on-and-off authentication unit 20 and the getting-on-and-off authentication system 1 can realize efficient operations of the vehicle V. Moreover, since the getting-on-and-off authentication unit 20 and the getting-on-and-off authentication system 1 can grasp getting on and off of users on the respective vehicles V accurately, it is possible to suppress suspicious persons from riding on the vehicle V, for example, and to improve security.

In the getting-on-and-off authentication unit 20 and the getting-on-and-off authentication system 1 described above, the retrieval result information received by the communication unit 24 includes the authentication result information obtained by the authentication processor 30g of the external device 30. That is, the getting-on-and-off authentication unit 20 can authorize a getting on and off of a person specified by the identification information with the aid of the getting-on-and-off authorization processor 25d on the basis of the authentication result information that forms the retrieval result information. As a result, the getting-on-and-off authentication unit 20 and the getting-on-and-off authentication system 1 can manage getting on and off of users on the vehicle V appropriately according to the authentication result of the identification information obtained by the authentication processor 30g.

More specifically, the getting-on-and-off authentication unit 20 and the getting-on-and-off authentication system 1 described above can execute an authentication process on the identification information on the basis of the identification information of the personal user, the present position information of the vehicle V, and the reservation information with the aid of the authentication processor 30g of the external device 30. As a result, since the getting-on-and-off authentication unit 20 and the getting-on-and-off authentication system 1 can authenticate the identification information more accurately, it is possible to manage getting on and off of users on the vehicle V more accurately.

The getting-on-and-off authentication unit 20 and the getting-on-and-off authentication system 1 described above can allow the getting-on-and-off authorization processor 25d to authorize a getting on and off of a person when the person specified by the identification information is authenticated. On the other hand, the getting-on-and-off authentication unit 20 and the getting-on-and-off authentication system 1 can allow the getting-on-and-off authorization processor 25d not to authorize a getting on and off of a person when the person specified by the identification information is not authenticated.

The getting-on-and-off authentication unit 20 and the getting-on-and-off authentication system 1 described above execute a door opening process with the aid of the door operation processor 25e when a getting on and off of the person is authorized by the getting-on-and-off authorization processor 25d. On the other hand, the getting-on-and-off authentication unit 20 and the getting-on-and-off authentication system 1 do not execute the door opening process when a getting on and off of the person is not authorized by the getting-on-and-off authorization processor 25d. As a result, the getting-on-and-off authentication unit 20 and the getting-on-and-off authentication system 1 can allow a user who is authorized to get on and off the vehicle V to actually get on and off the vehicle V and prevent a getting on and off of a user who is not authorized to get on and off the vehicle V. In this way, the getting-on-and-off authentication unit 20 and the getting-on-and-off authentication system 1 can manage a getting on and off of a user on the vehicle V more reliably.

In the getting-on-and-off authentication unit 20 described above, the reading unit 22 includes the vehicle outside reading unit 22O and the vehicle inside reading unit 22I, and the vehicle outside reading unit 22O and the vehicle inside reading unit 22I are unitized by the housing 21. As a result, the getting-on-and-off authentication unit 20 can be provided in the vehicle V in a state in which the vehicle outside reading unit 22O used when a user gets on the vehicle V and the vehicle inside reading unit 22I used when a user gets off the vehicle V are integrated with the housing 21. Therefore, the mounting property of the getting-on-and-off authentication unit 20 on the vehicle V can be improved.

### [Second Embodiment]

An in-vehicle system and a getting-on-and-off authentication system according to a second embodiment are different from those of the first embodiment in that the authentication processor is provided in the in-vehicle system. Constituent elements similar to those of the above-described embodiment will be denoted by the same reference numerals, and redundant description of the same configuration, operations, and effects as those of the above-described embodiment will be omitted as much as possible (the same is true to the other embodiments).

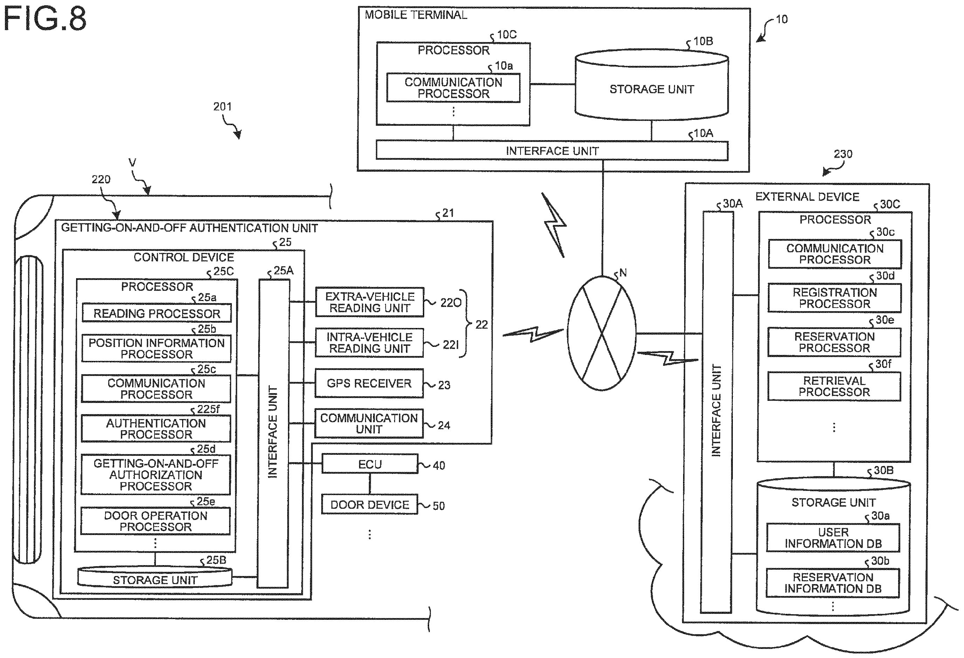

A getting-on-and-off authentication system 201 according to the present embodiment illustrated in FIG. 8 is different from the getting-on-and-off authentication system 1 described above in that it includes a getting-on-and-off authentication unit 220 as an in-vehicle system instead of the getting-on-and-off authentication unit 20 and includes an external device 230 instead of the external device 30. Moreover, information transmitted and received between the getting-on-and-off authentication unit 220 and the external device 230 of the getting-on-and-off authentication system 201 is partially different from the information transmitted and received between the getting-on-and-off authentication unit 20 and the external device 30. The other constituent elements of the getting-on-and-off authentication system 201 are substantially similar to those of the getting-on-and-off authentication system 1.

The external device 230 according to the present embodiment is different from the external device 30 described above in that the processor 30C does not include the authentication processor 30g. The other constituent elements of the external device 230 are substantially similar to those of the external device 30.

In the present embodiment, the retrieval result information that the external device 230 transmits to the getting-on-and-off authentication unit 220 includes the target vehicle reservation information retrieved by the retrieval processor 30f and does not include the authentication result information authenticated by the authentication processor 30g. That is, the retrieval result information that the external device 230 transmits to the getting-on-and-off authentication unit 220 is reservation information registered in advance in the external device 230 and target vehicle reservation information related to reservation of the vehicle V retrieved by the external device 230 on the basis of the identification information transmitted to the external device 230. The communication processor 30c of the present embodiment can execute a process of transmitting the target vehicle reservation information retrieved by the retrieval processor 30f to the communication unit 24 with the aid of the interface unit 30A as the retrieval result information.

The getting-on-and-off authentication unit 220 according to the present embodiment is different from the getting-on-and-off authentication unit 20 described above in that the processor 25C includes an authentication processor 225f. The other constituent elements of the getting-on-and-off authentication unit 220 are substantially similar to those of the getting-on-and-off authentication unit 20.

The authentication processor 225f is a portion having a function of executing an authentication process. The authentication process of the present embodiment is a process of authenticating read identification information. The authentication processor 225f can execute a process of authenticating a person specified by the read identification information on the basis of at least the read identification information read by the reading unit 22 and the target vehicle reservation information included in the retrieval result information received by the communication unit 24. More specifically, the authentication processor 225f authenticates the read identification information on the basis of the present position information acquired by the GPS receiver 23 in addition to the read identification information and the target vehicle reservation information. In the following description, the present position information acquired by the GPS receiver 23 of the vehicle V will be sometimes referred to as "acquired present position information" for the sake of convenience. That is, the authentication processor 225f of the present embodiment authenticates the read identification information on the basis of the read identification information, the acquired present position information, and the target vehicle reservation information and generates authentication result information corresponding to the authentication result of the read identification information.

Specifically, the authentication processor 225f retrieves a person specified by the read identification information and a person specified by the reserving person information included in the target vehicle reservation information. Furthermore, the authentication processor 225f retrieves a present position of the vehicle V specified by the acquired present position information and a getting-on-and-off position specified by the reserved getting-on-and-off position information included in the target vehicle reservation information. The authentication processor 225f generates authentication result information indicating that a person specified by the read identification information is authenticated when Condition (21) is satisfied.

Condition (21); a person specified by the read identification information matches a person specified by the reserving person information, and a present position of the vehicle V specified by the acquired present position information matches a getting-on-and-off position specified by the reserved getting-on-and-off position information.

On the other hand, the authentication processor 225f generates authentication result information indicating that a person specified by the read identification information is not authenticated when Condition (22) or (23) is satisfied.

Condition (22); a person specified by the read identification information does not match a person specified by the reserving person information.

Condition (23); a present position of the vehicle V specified by the acquired present position information does not match a getting-on-and-off position specified by the reserved getting-on-and-off position information.

The authentication result information generated by the authentication processor 225f in the above-described manner is information based on the target vehicle reservation information included in the retrieval result information received by the communication unit 24. The getting-on-and-off authorization processor 25d of the present embodiment authorizes a getting on and off of a person specified by the read identification information on the basis of the authentication result information generated by the authentication processor 225f. That is, the getting-on-and-off authorization processor 25d authorizes a getting on and off of the person on the basis of the authentication result information indicating that the person specified by the read identification information is authenticated. On the other hand, the getting-on-and-off authorization processor 25d does not authorize a getting on and off of the person on the basis of the authentication result information indicating that the person specified by the read identification information is not authenticated.

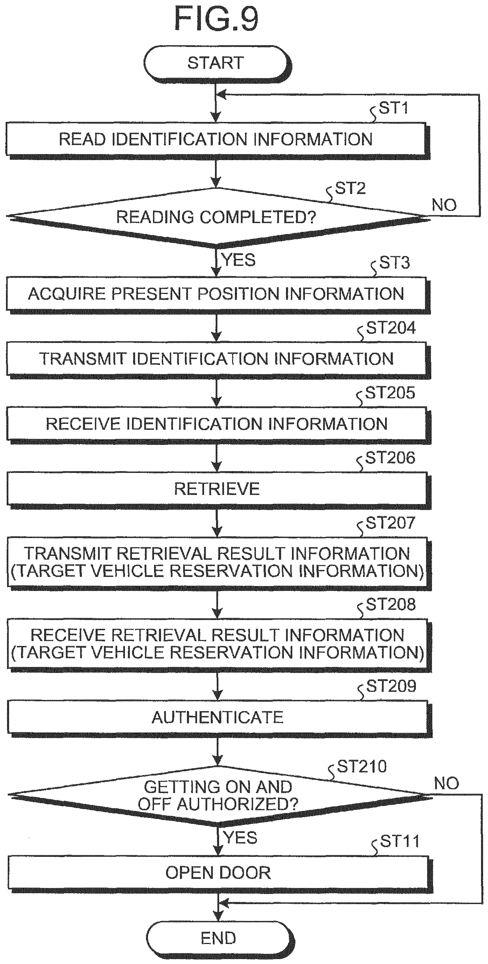

Next, an overview of an example of a getting-on-and-off authentication method will be described with reference to the flowchart of FIG. 9. Redundant description overlapping the description of FIG. 4 will be omitted as much as possible.

After the process of Step ST3 is executed, the communication processor 25c controls the communication unit 24 and executes an in-vehicle-side communication process (Step ST204). The communication processor 25c of the present embodiment transmits the identification information read in Step ST1 to the external device 230 with the aid of the communication unit 24 by executing the in-vehicle-side communication process.

Subsequently, the communication processor 30c controls the interface unit 30A and executes an external-side communication process (Step ST205). The communication processor 30c of the present embodiment receives the identification information transmitted in Step ST204 with the aid of the interface unit 30A by executing the external-side communication process.

Subsequently, the retrieval processor 30f executes a retrieval process (Step ST206). The retrieval processor 30f retrieves target vehicle reservation information of the transmitting vehicle V having transmitted the received identification information on the basis of the received identification information received in Step ST205 from pieces of reservation information registered in the reservation information DB 30b by executing the retrieval process.

Subsequently, the communication processor 30c controls the interface unit 30A and executes an external-side communication process (Step ST207). The communication processor 30c of the present embodiment transmits the retrieval result information including the target vehicle reservation information retrieved in Step ST206 from the interface unit 30A to the getting-on-and-off authentication unit 220 by executing the external-side communication process.

Subsequently, the communication processor 25c controls the communication unit 24 and executes an in-vehicle-side communication process (Step ST208). The communication processor 25c receives the retrieval result information including the target vehicle reservation information transmitted in Step ST207 with the aid of the communication unit 24 by executing the in-vehicle-side communication process.

Subsequently, the authentication processor 225f of the getting-on-and-off authentication unit 220 executes an authentication process (Step ST209). The authentication processor 225f authenticates read identification information on the basis of the read identification information read in Step ST1, the acquired present position information acquired in Step ST3, and the target vehicle reservation information included in the retrieval result information received in Step ST208 and generates the authentication result information by executing the authentication process.

Subsequently, the getting-on-and-off authorization processor 25d executes a getting-on-and-off authorization process (Step ST210). The getting-on-and-off authorization processor 25d determines whether a getting on and off of a person specified by the read identification information read in Step ST1 will be authorized on the basis of the authentication result information generated in Step ST209 by executing the getting-on-and-off authorization process. The getting-on-and-off authorization processor 25d determines that the getting on and off of the person is to be authorized (Step ST210: Yes) when the authentication result information generated in Step ST209 is authentication result information indicating that the person specified by the read identification information is authenticated and proceeds to Step ST11. The getting-on-and-off authorization processor 25d determines that the getting on and off of the person is not to be authorized (Step ST210: No) when the authentication result information generated in Step ST209 is authentication result information indicating that the person specified by the read identification information is not authenticated and ends the process related to the getting-on-and-off authentication method without executing the process of Step ST11.

The getting-on-and-off authentication unit 220 and the getting-on-and-off authentication system 201 described above transmit the identification information of a person read by the reading unit 22 provided in the vehicle V to the external device 230 outside the vehicle V with the aid of the communication unit 24. The getting-on-and-off authentication unit 220 receives the retrieval result information retrieved on the basis of the identification information by the external device 230 with the aid of the communication unit 24. The getting-on-and-off authentication unit 220 executes a process of authorizing a getting on and off of a person specified by the identification information on the vehicle V with the aid of the getting-on-and-off authorization processor 25d on the basis of the retrieval result information received by the communication unit 24. As a result, the getting-on-and-off authentication unit 220 and the getting-on-and-off authentication system 201 can manage getting on and off of users on the vehicle V appropriately.

In the getting-on-and-off authentication unit 220 and the getting-on-and-off authentication system 201 described above, the reservation information (the target vehicle reservation information) of the vehicle V corresponding to the retrieval result obtained by the retrieval processor 30f of the external device 230 is included as the retrieval result information received by the communication unit 24. That is, the getting-on-and-off authentication unit 220 can authorize a getting-on-and-off of a person specified by the identification information with the aid of the getting-on-and-off authorization processor 25d on the basis of the reservation information of the vehicle V forming the retrieval result information. As a result, the getting-on-and-off authentication unit 220 and the getting-on-and-off authentication system 201 can manage getting-on-and-off of users on the vehicle V on the basis of the reservation information of the vehicle V retrieved by the retrieval processor 30f on the basis of the identification information appropriately.

More specifically, in the getting-on-and-off authentication unit 220 and the getting-on-and-off authentication system 201 described above, the authentication processor 225f of the getting-on-and-off authentication unit 220 can execute an authentication process on the identification information on the basis of the identification information of the personal user, the present position information of the vehicle V, and the reservation information. As a result, the getting-on-and-off authentication unit 220 can authenticate the identification information more accurately. The getting-on-and-off authentication unit 220 can authorize a getting-on-and-off of a person specified by the identification information with the aid of the getting-on-and-off authorization processor 25d on the basis of the authentication result information corresponding to the authentication result obtained by the authentication processor 225f. As a result, the getting-on-and-off authentication unit 220 and the getting-on-and-off authentication system 201 can manage getting-on-and-off of users on the vehicle V more accurately.

### [Third Embodiment]

The content of a retrieval process by a retrieval processor in an in-vehicle system and a getting-on-and-off authentication system according to a third embodiment is different from that of the second embodiment.

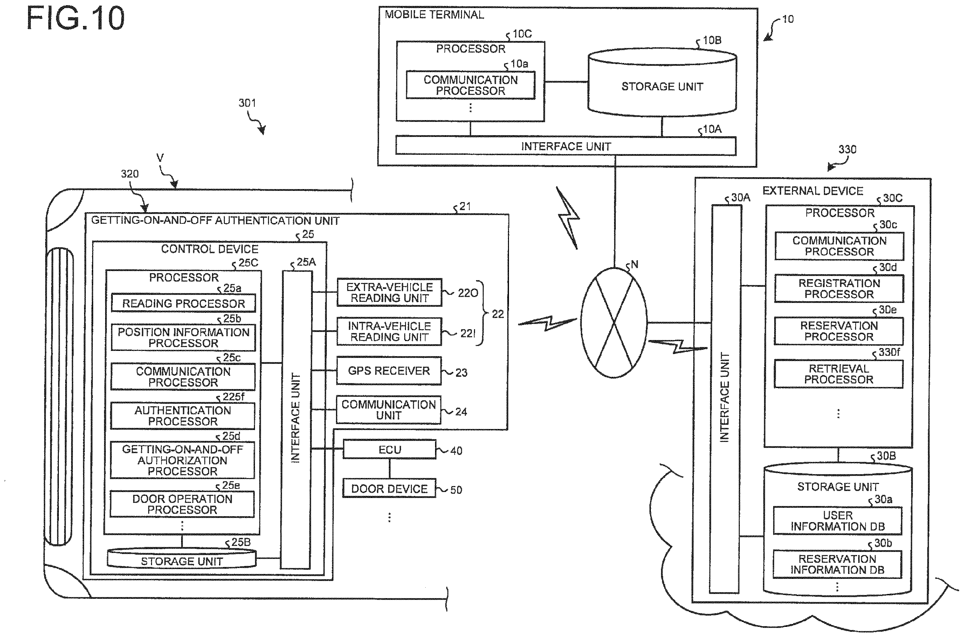

A getting-on-and-off authentication system 301 according to the present embodiment illustrated in FIG. 10 is different from the getting-on-and-off authentication system 201 described above in that it includes a getting-on-and-off authentication unit 320 as an in-vehicle system instead the getting-on-and-off authentication unit 220 and includes an external device 330 instead of the external device 230. In the getting-on-and-off authentication system 301, information transmitted and received between the getting-on-and-off authentication unit 320 and the external device 330 is partially different from information transmitted and received between the getting-on-and-off authentication unit 220 and the external device 230. The other constituent elements of the getting-on-and-off authentication system 301 are substantially similar to those of the getting-on-and-off authentication system 201.

The external device 330 according to the present embodiment is different from the external device 230 described above in that it includes a retrieval processor 330f instead of the retrieval processor 30f. The other constituent elements of the external device 330 are substantially similar to those of the external device 230.

The communication unit 24 of the present embodiment has a function of transmitting vehicle identification information (vehicle ID information) stored in advance in the storage unit 25B to the external device 330 via the network N instead of the identification information read by the reading unit 22. The vehicle identification information is information capable of distinguishing and specifying the vehicle V on which the getting-on-and-off authentication unit 320 is mounted and other vehicles V. The vehicle identification information is assigned to individual vehicles V managed by an operator of a business that uses vehicles V and is stored in advance in the storage unit 25B. The communication processor 25c can execute a process of reading the vehicle identification information stored in the storage unit 25B and transmitting the read vehicle identification information to the external device 330 with the aid of the communication unit 24. The communication processor 30c of the present embodiment can execute a process of receiving the vehicle identification information transmitted by the communication unit 24 with the aid of the interface unit 30A.

The retrieval processor 330f of the present embodiment is a portion having a function of executing a retrieval process. The retrieval process of the present embodiment is a process of retrieving various pieces of information on the basis of the vehicle identification information transmitted to the external device 330 by the communication unit 24 and received by the interface unit 30A. The retrieval processor 330f retrieves target vehicle reservation information corresponding to the vehicle identification information from pieces of reservation information registered in the reservation information DB 30b. Here, the target vehicle reservation information is reservation information registered in advance in the reservation information DB 30b of the external device 30 and is reservation information related to reservation of the vehicle V specified by the vehicle identification information (that is, the transmitting vehicle V having transmitted the vehicle identification information). The target vehicle reservation information forms retrieval result information indicating a retrieval result retrieved by the external device 330 on the basis of the vehicle identification information transmitted to the external device 330 with the aid of the communication unit 24. That is, the retrieval result information that the external device 330 transmits to the getting-on-and-off authentication unit 320 is the target vehicle reservation information retrieved by the retrieval processor 330f. The communication processor 30c of the present embodiment can execute a process of transmitting the target vehicle reservation information retrieved by the retrieval processor 330f to the communication unit 24 with the aid of the interface unit 30A as the retrieval result information. The communication unit 24 of the present embodiment has a function of receiving the retrieval result information including the target vehicle reservation information retrieved on the basis of the vehicle identification information by the retrieval processor 330f of the external device 330. That is, the communication processor 25c can execute a process of receiving the retrieval result information including the target vehicle reservation information retrieved on the basis of the vehicle identification information by the retrieval processor 330f of the external device 30 with the aid of the communication unit 24. The authentication processor 225f of the present embodiment can execute a process of authenticating a person specified by the read identification information on the basis of at least the read identification information read by the reading unit 22 and the target vehicle reservation information included in the retrieval result information received by the communication unit 24. The authentication processor 225f of the present embodiment authenticates the read identification information on the basis of the read identification information, the present position information, and the target vehicle reservation information and generates authentication result information corresponding to the authentication result of the read identification information. The getting-on-and-off authorization processor 25d of the present embodiment authorizes a getting on and off of a person specified by the read identification information on the basis of the authentication result information generated by the authentication processor 225f.

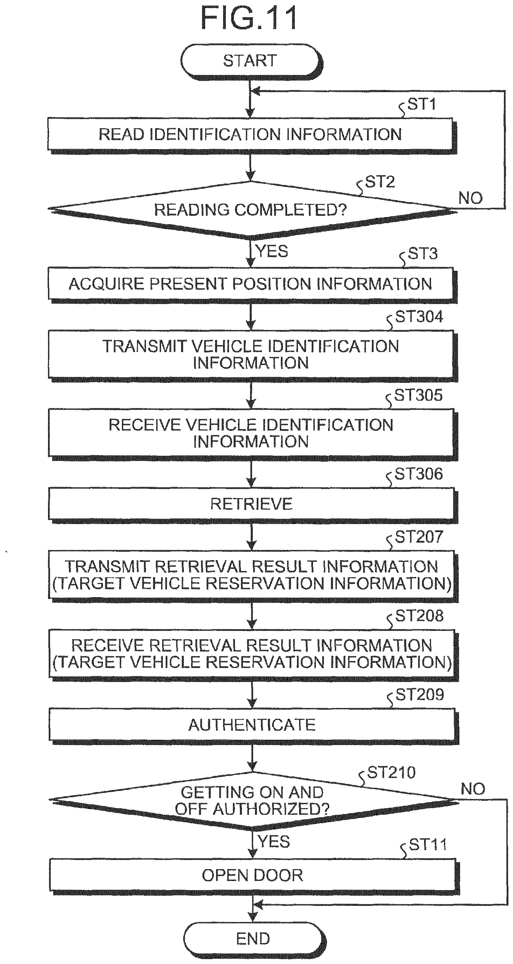

Next, an overview of an example of a getting-on-and-off authentication method will be described with reference to the flowchart of FIG. 11.

After the process of Step ST3 is executed, the communication processor 25c controls the communication unit 24 and executes an in-vehicle-side communication process (Step ST304). The communication processor 25c of the present embodiment transmits the vehicle identification information of the vehicle V stored in advance in the storage unit 25B to the external device 330 with the aid of the communication unit 24 by executing the in-vehicle-side communication process.

Subsequently, the communication processor 30c controls the interface unit 30A and executes an external-side communication process (Step ST305). The communication processor 30c of the present embodiment receives the vehicle identification information transmitted in Step ST304 with the aid of the interface unit 30A by executing the external-side communication process.

Subsequently, the retrieval processor 330f executes a retrieval process (Step ST306). The retrieval processor 330f of the present embodiment retrieves target vehicle reservation information of the vehicle V on the basis of the vehicle identification information received in Step ST305 from pieces of reservation information registered in the reservation information DB 30b by executing the retrieval process and proceeds to the process of Step ST207. The processes of Step ST207 and subsequent steps are substantially similar to the processes described in FIG. 9.

The getting-on-and-off authentication unit 320 and the getting-on-and-off authentication system 301 described above transmit the vehicle identification information for specifying the vehicle V to the external device 330 outside the vehicle V with the aid of the communication unit 24. The getting-on-and-off authentication unit 320 receives the retrieval result information retrieved on the basis of the vehicle identification information by the external device 330 with the aid of the communication unit 24. Moreover, the getting-on-and-off authentication unit 320 causes the reading unit 22 provided in the vehicle V to read the identification information of a person. The getting-on-and-off authentication unit 320 executes a process of authorizing a getting on and off of a person specified by the identification information with the aid of the getting-on-and-off authorization processor 25d on the basis of the identification information and the retrieval result information. As a result, the getting-on-and-off authentication unit 320 and the getting-on-and-off authentication system 301 can manage getting on and off of users on the vehicle V appropriately.

In the getting-on-and-off authentication unit 320 and the getting-on-and-off authentication system 301 described above, the reservation information of the vehicle V corresponding to the retrieval result obtained by the retrieval processor 330f of the external device 330 is included as the retrieval result information received by the communication unit 24. That is, the getting-on-and-off authentication unit 320 can authorize a getting on and off of a person specified by the identification information with the aid of the getting-on-and-off authorization processor 25d on the basis of the reservation information and the identification information of the vehicle V forming the retrieval result information. As a result, the getting-on-and-off authentication unit 320 and the getting-on-and-off authentication system 301 can manage a getting on and off of a user on the vehicle V appropriately according to the reservation information of the vehicle V retrieved by the retrieval processor 330f on the basis of the vehicle identification information.

More specifically, in the getting-on-and-off authentication unit 320 and the getting-on-and-off authentication system 301 described above, the authentication processor 225f of the getting-on-and-off authentication unit 320 can execute an authentication process on the identification information on the basis of the identification information of the personal user, the present position information of the vehicle V, and the reservation information. As a result, the getting-on-and-off authentication unit 320 can authenticate the identification information more accurately. The getting-on-and-off authentication unit 320 can authorize a getting on and off of a person specified by the identification information with the aid of the getting-on-and-off authorization processor 25d on the basis of the authentication result information corresponding to the authentication result obtained by the authentication processor 225f. As a result, the getting-on-and-off authentication unit 320 and the getting-on-and-off authentication system 301 can manage getting on and off of persons on the vehicle V more accurately.

The in-vehicle system and the getting-on-and-off authentication system according to the embodiments of the present invention are not limited to the above-described embodiments, and various changes can be made within the scope described in the claims. The in-vehicle system and the getting-on-and-off authentication system according to the present embodiment may be configured by appropriately combining the constituent elements of the embodiments and the modifications described above.

Although it has been described that the vehicle V is a fully-automated vehicle which is managed by a specific operator, used by the general public users, and moved automatically to a getting-on-and-off position reserved by a user, there is no limitation thereto. Moreover, although it has been described that the person riding on the vehicle V is typically a user who gets on the vehicle V and moves to a desired destination, the person is not limited thereto and the person may be a driver of the vehicle V, for example.

Although it has been described that the getting-on-and-off authentication system 1, 201, or 301 includes the mobile terminal 10, the present invention is not limited thereto, and the getting-on-and-off authentication system may not include the mobile terminal 10.

Although it has been described that the getting-on-and-off authentication unit 20, 220, or 320 has the housing 21 in which the reading unit 22, the GPS receiver 23, the communication unit 24, and the control device 25 are assembled and unitized, there is no limitation thereto. The getting-on-and-off authentication unit 20, 220, or 320 may be configured such that the reading unit 22, the GPS receiver 23, the communication unit 24, and the like are provided separately from the housing 21 and are communicably connected to the control device 25. Moreover, although it has been described that the housing 21 is provided in the body panel P or the like of the vehicle V, there is no limitation thereto.

Although it has been described that the reading unit 22 includes the vehicle outside reading unit 22O and the vehicle inside reading unit 22I, one reading unit may be used for riding. Moreover, although it has been described that the vehicle outside reading unit 22O and the vehicle inside reading unit 22I are provided to be exposed to the inside and the outside of the vehicle V, there is no limitation thereto, and both reading units may be included in the housing 21 depending on cases, for example.

Although it has been described that the communication unit 24 receives various pieces of information such as the retrieval result information from the external device 30, 230, or 330 via the network N, there is no limitation thereto. The communication unit 24 may receive various pieces of information such as the retrieval result information from the external device 30, 230, or 330 via the mobile terminal 10 or the like as well as the network N.

Although it has been described that the getting-on-and-off authentication unit 20, 220, or 320 executes a door opening process with the aid of the door operation processor 25e when a getting on and off is authorized by the getting-on-and-off authorization processor 25d, there is no limitation thereto, and another process may be executed by another processor. The getting-on-and-off authentication unit 20, 220, or 320 may execute a process of outputting various messages when a getting on and off is authorized by the getting-on-and-off authorization processor 25d, for example.

The authentication processor 30g or 225f may not use the present position information of the vehicle V during the authentication process. In this case, the getting-on-and-off authentication unit 20, 220, or 320 may not include the GPS receiver 23.

The control device 25 and the external device 30, 230, or 330 may be configured as separate members, and the respective units may be connected so as to be able to exchange electrical signals, and some functions may be realized by another control device. Moreover, the program, the application, and various pieces of data described above may be updated appropriately and may be stored in a server connected to the getting-on-and-off authentication system 1, 201, or 301 via an arbitrary network N. All or some of the program, the application, various pieces of data described above may be downloaded as necessary, for example. Moreover, for example, all or some of the processing functions of the mobile terminal 10, the control device 25, and the external device 30, 230, or 330 may be realized by a CPU or the like and a program analyzed and executed by the CPU or the like, for example, and may be realized by hardware based on wired logics or the like.

Since the in-vehicle system and the getting-on-and-off authentication system according to the present embodiments include the above-described configuration, it is possible to manage getting on and off of users on a vehicle appropriately.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An in-vehicle system (20, 220) comprising:
a reading unit (22) provided in a vehicle (V), and configured to read identification information capable of identifying a person;
a communication unit (24) that transmits the identification information read by the reading unit (22) to an external device (30, 230) outside the vehicle (V), and that receives retrieval result information retrieved on the basis of the identification information by the external device (30, 230);
a getting-on-and-off authorization processor (25d) capable of executing a process of authorizing a getting on and off of a person specified by the identification information on the vehicle (V) on the basis of the retrieval result information received by the communication unit (24); and
an output device that outputs a message indicating that the getting on and off of the person is not authorized.

2. The in-vehicle system (20) according to claim 1, wherein
the retrieval result information includes authentication result information corresponding to an authentication result of the identification information obtained by the external device (30) based on the identification information transmitted to the external device (30) and reservation information which has been registered in advance in the external device (30), and which is related to reservation of the vehicle (V) having transmitted the identification information.

3. The in-vehicle system (20) according to claim 2, further comprising:
a position information acquiring unit (23) that acquires present position information indicating a present position of the vehicle (V), wherein
the communication unit (24) transmits the present position information acquired by the position information acquiring unit (23) to the external device (30), and
the external device (30) generates the authentication result information indicating that a person specified by the identification information is authenticated when a person specified by the identification information transmitted from the communication unit (24) matches a person specified by reserving person information included in the reservation information of the vehicle (V) retrieved on the basis of the identification information, and a present position of the vehicle (V) specified by the present position information transmitted from the communication unit (24) matches a getting-on-and-off position specified by reserved getting-on-and-off position information included in the reservation information retrieved on the basis of the identification information.

4. The in-vehicle system (220) according to claim 1, wherein
the retrieval result information includes reservation information which has been registered in advance in the external device (230), and which is related to reservation of the vehicle (V) retrieved by the external device (230) on the basis of the identification information transmitted to the external device (230).

5. The in-vehicle system (220) according to claim 4, further comprising:
a position information acquiring unit (23) that acquires present position information indicating a present position of the vehicle (V); and
an authentication processor (225f) that authenticates a person specified by the identification information on the basis of the identification information read by the reading unit (22), the present position information acquired by the position information acquiring unit (23), and the reservation information included in the retrieval result information received by the communication unit (24), wherein
the authentication processor (225f) that authenticates a person specified by the identification information when a persons specified by the identification information read by the reading unit (22) matches a person specified by reserving person information included in the reservation information received by the communication unit (24), and a present position of the vehicle (V) specified by the present position information acquired by the position information acquiring unit (23) matches a getting-on-and-off position specified by reserved getting-on-and-off position information included in the reservation information received by the communication unit (24).

6. An in-vehicle system (320) comprising:
a reading unit (22) provided in a vehicle (V), and configured to read identification information capable of identifying a person;
a communication unit (24) that transmits vehicle identification information for specifying the vehicle (V) to an external device (330) outside the vehicle (V), and that receives retrieval result information retrieved on the basis of the vehicle identification information by the external device (330); a getting-on-and-off authorization processor (25d) capable of executing a process of authorizing a getting on and off of a person specified by the identification information on the vehicle (V) on the basis of the identification information read by the reading unit (22) and the retrieval result information received by the communication unit (24); and
an output device that outputs a message indicating that the getting on and off of the person is not authorized.

7. The in-vehicle system (20, 220, 320) according to any one of claims 1 to 6, wherein
the getting-on-and-off authorization processor (25d) authorizes a getting on and off of a person specified by the identification information on the vehicle (V) when the person specified by the identification information is authenticated and does not authorize a getting on and off of a person specified by the identification information on the vehicle (V) when the person specified by the identification information is not authenticated.

8. The in-vehicle system (20, 220, 320) according to any one of claims 1 to 7, further comprising:
a door operation processor (25e) that executes a door opening process of opening a door (D) of the vehicle (V) when a getting on and off of a person specified by the identification information on the vehicle (V) is authorized by the getting-on-and-off authorization processor (25d), and that does not execute the door opening process when a getting on and off of a person specified by the identification information on the vehicle (V) is not authorized by the getting-on-and-off authorization processor (25d).

9. The in-vehicle system (20, 220, 320) according to any one of claims 1 to 8, wherein
the reading unit (22) includes a vehicle outside reading unit (220) provided to be exposed to the outside of the vehicle (V) and a vehicle inside reading unit (22I) provided to be exposed to the inside of the vehicle (V), and the vehicle outside reading unit (220) and the vehicle inside reading unit (22I) are unitized by a housing.

10. A getting-on-and-off authentication system (1, 201) comprising:
an in-vehicle system (20, 220) mounted on a vehicle (V); and
an external device (30, 230) provided outside the vehicle (V), wherein
the in-vehicle system (20, 220) includes:
a reading unit (22) provided in the vehicle (V), and configured to read identification information capable of identifying a person;
a communication unit (24) that transmits the identification information read by the reading unit (22) to the external device (30, 230), and that receives retrieval result information retrieved on the basis of the identification information by the external device (30, 230);
a getting-on-and-off authorization processor (25d) capable of executing a process of authorizing a getting on and off of a person specified by the identification information on the vehicle (V) on the basis of the retrieval result information received by the communication unit (24); and
an output device that outputs a message indicating that the getting on and off of the person is not authorized.

11. A getting-on-and-off authentication system (301) comprising:
an in-vehicle system (320) mounted on a vehicle (V); and
an external device (330) provided outside the vehicle (V), wherein
the in-vehicle system (320) includes:
a reading unit (22) provided in the vehicle (V), and configured to read identification information capable of identifying a person;
a communication unit (24) that transmits vehicle identification information for specifying the vehicle (V) to the external device (330), and that receives retrieval result information retrieved on the basis of the vehicle identification information by the external device (330);
a getting-on-and-off authorization processor (25d) capable of executing a process of authorizing a getting on and off of a person specified by the identification information on the vehicle (V) on the basis of the identification information read by the reading unit (22) and the retrieval result information received by the communication unit (24); and
an output device that outputs a message indicating that the getting on and off of the person is not authorized.

12. The in-vehicle system (20) according to any one of claims 2 to 5, wherein
the reservation information includes reserved getting on and off time information for specifying a reserved getting on and off time, and
the reserved getting-on-and-off time information is taken into account when authenticating a person specified.

13. The getting-on-and-off authentication system (301) according to claims 10 or 11, wherein
the vehicle system (20, 220, 320), when a getting on and off of the person is not authorized, outputs a notification that a getting on and off is not authorized to the external device (30, 230, 330), and
the external device (30, 230, 330), when receiving the notification that the getting on and off of the person is not authorized, communicates with the in-vehicle system (20, 220, 320), and allows the person to make conversation with an operator of the external device (30, 230, 330).

## Patentansprüche

1. Fahrzeuginternes System (20, 220), das umfasst:
eine Lese-Einheit (22), die in einem Fahrzeug (V) vorhanden und so ausgeführt ist, dass sie Identifikations-Informationen liest, mit denen eine Person identifiziert werden kann;
eine Kommunikations-Einheit (24), die die von der Lese-Einheit (22) gelesenen Identifikations-Informationen zu einer externen Vorrichtung (30, 230) außerhalb des Fahrzeugs (V) überträgt und die auf Basis der Identifikations-Informationen durch die externe Vorrichtung (30, 230) abgerufene Abrufergebnis-Informationen empfängt;
einen Prozessor (25d) für Autorisierung von Ein- und Aussteigen, der in der Lage ist, einen Prozess zum Autorisieren von Ein- und Aussteigen einer durch die Identifikations-Informationen angegebenen Person an dem Fahrzeug (V) auf Basis der durch die Kommunikations-Einheit (24) empfangenen Abrufergebnis-Informationen auszuführen; und
eine Ausgabevorrichtung, die eine Meldung dahingehend ausgibt, dass das Ein- und Aussteigen der Person nicht autorisiert ist.

2. Fahrzeuginternes System (20) nach Anspruch 1, wobei
die Abrufergebnis-Informationen Authentifizierungsergebnis-Informationen, die einem Authentifizierungsergebnis der Identifikations-Informationen entsprechen, die durch die externe Vorrichtung (30) auf Basis der zu der externen Vorrichtung (30) übertragenen Identifikations-Informationen erfasst werden, sowie Reservierungs-Informationen einschließen, die im Voraus in der externen Vorrichtung (30) registriert worden sind und die sich auf Reservierung des Fahrzeugs (V) beziehen, das die Identifikations-Informationen übertragen hat.

3. Fahrzeuginternes System (20) nach Anspruch 2, das des Weiteren umfasst:
eine Einheit (23) zum Beziehen von Positions-Informationen, die Informationen zu einer aktuellen Position bezieht, die eine aktuelle Position des Fahrzeugs (V) anzeigen, wobei die Kommunikations-Einheit (24) die durch die Einheit (23) zum Beziehen von Positions-Informationen bezogenen Informationen zu einer aktuellen Position zu der externen Vorrichtung (30) überträgt, und
die externe Vorrichtung (30) die Authentifizierungsergebnis-Informationen erzeugt, die anzeigen, dass eine durch die Identifikations-Informationen angegebene Person authentifiziert wird, wenn durch die von der Kommunikations-Einheit (24) übertragenen Identifikations-Informationen angegebene Person mit einer Person übereinstimmen, die durch Informationen zu einer reservierenden Person angegeben wird, die in den auf Basis der Identifikations-Informationen abgerufenen Reservierungs-Informationen des Fahrzeugs (V) enthalten sind, und eine aktuelle Position des Fahrzeugs (V), die durch die von der Kommunikations-Einheit (24) übertragenen Informationen zu einer aktuellen Position angegeben wird, mit einer Ein-und-Aussteige-Position übereinstimmt, die durch Informationen zu einer reservierten Ein-und-Aussteige-Position angegeben wird, die in den auf Basis der Identifikations-Informationen abgerufenen Reservierungs-Informationen enthalten sind.

4. Fahrzeuginternes System (220) nach Anspruch 1, wobei
die Abrufergebnis-Informationen Reservierungs-Informationen einschließen, die im Voraus in der externen Vorrichtung (230) registriert worden sind und die sich auf durch die externe Vorrichtung (230) auf Basis der zu der externen Vorrichtung (230) übertragenen Identifikations-Informationen abgerufene Reservierung des Fahrzeugs (V) beziehen.

5. Fahrzeuginternes System (220) nach Anspruch 4, das des Weiteren umfasst:
eine Einheit (23) zum Beziehen von Positions-Informationen, die Informationen zu einer aktuellen Position bezieht, die eine aktuelle Position des Fahrzeugs (V) anzeigen; sowie
einen Authentifizierungs-Prozessor (225f), der eine durch die Identifikations-Informationen angegebene Person auf Basis der von der Lese-Einheit (22) gelesenen Identifikations-Informationen, der durch die Einheit (23) zum Beziehen von Positions-Informationen erfassten Informationen zu einer aktuellen Position und der Reservierungs-Informationen authentifiziert, die in den durch die Kommunikations-Einheit (24) empfangenen Abrufergebnis-Informationen enthalten sind, wobei
der Authentifizierungs-Prozessor (225f), der eine durch die Identifikations-Informationen angegebene Person authentifiziert, wenn eine durch die von der Lese-Einheit (22) gelesenen Identifikations-Informationen angegebene Person mit einer Person übereinstimmt, die durch Informationen zu einer reservierenden Person angegeben wird, die in den durch die Kommunikations-Einheit (24) empfangenen Reservierungs-Informationen enthalten sind, und eine aktuelle Position des Fahrzeugs (V), die durch die Informationen zu einer aktuellen Position angegeben wird, die durch die Einheit (23) zum Beziehen von Positions-Informationen bezogen werden, mit einer Ein-und-Aussteige-Position übereinstimmt, die durch Informationen zu einer reservierten Ein-und-Aussteige-Position angegeben wird, die in den durch die Kommunikations-Einheit (4) empfangenen Reservierungs-Informationen enthalten sind.

6. Fahrzeuginternes System (20, 320), das umfasst:
eine Lese-Einheit (22), die in einem Fahrzeug (V) vorhanden und so ausgeführt ist, dass sie Identifikations-Informationen lesen kann, mit denen eine Person identifiziert werden kann;
eine Kommunikations-Einheit (24), die Fahrzeug-Identifikations-Informationen, die das Fahrzeug (V) angeben, zu einer externen Vorrichtung (330) außerhalb des Fahrzeugs (V) überträgt und die Abrufergebnis-Informationen empfängt, die auf Basis der Fahrzeug-Identifikations-Informationen durch die externe Vorrichtung (330) abgerufen werden; einen Prozessor (25d) für Autorisierung von Ein- und Aussteigen, der in der Lage ist, einen Prozess zum Autorisieren von Ein-und Aussteigen einer durch die Identifikations-Informationen angegebenen Person an dem Fahrzeug (V) auf Basis der durch die Lese-Einheit (22) gelesenen Identifikations-Informationen und der durch die Kommunikations-Einheit (24) empfangenen Abrufergebnis-Informationen auszuführen; sowie
eine Ausgabevorrichtung, die eine Meldung dahingehend ausgibt, dass das Ein- und Aussteigen der Person nicht autorisiert ist.

7. Fahrzeuginternes System (20, 220, 320) nach einem der Ansprüche 1 bis 6, wobei
der Prozessor (25d) für Autorisierung von Ein- und Aussteigen ein Ein- und Aussteigen einer durch die Identifikations-Informationen angegebenen Person an dem Fahrzeug (V) autorisiert, wenn die durch die Identifikations-Informationen angegebene Person authentifiziert wird, und ein Ein- und Aussteigen einer durch die Identifikations-Informationen angegebenen Person an dem Fahrzeug (V) nicht autorisiert, wenn die durch die Identifikations-Informationen angegebene Person nicht authentifiziert wird.

8. Fahrzeuginternes System (20, 220, 320) nach einem der Ansprüche 1 bis 7, das des Weiteren umfasst:
einen Prozessor (25e) für Tür-Betätigung, der einen Türöffnungs-Prozess zum Öffnen einer Tür (D) des Fahrzeugs (V) ausführt, wenn ein Ein- und Aussteigen einer durch die Identifikations-Informationen angegebenen Person an dem Fahrzeug (V) durch den Prozessor (25d) für Autorisierung von Ein- und Aussteigen autorisiert wird, und der den Türöffnungs-Prozess nicht ausführt, wenn ein Ein- und Aussteigen einer durch die Identifikations-Informationen angegebenen Person an dem Fahrzeug (V) durch den Prozessor (25d) für Autorisierung von Ein- und Aussteigen nicht autorisiert wird.

9. Fahrzeuginternes System (20, 220, 320) nach einem der Ansprüche 1 bis 8, wobei die Lese-Einheit (22) eine Lese-Einheit (220) an der Fahrzeug-Außenseite, die an der Außenseite des Fahrzeugs (V) freiliegend vorhanden ist, sowie eine Lese-Einheit (221) an der Fahrzeug-Innenseite einschließt, die an der Innenseite des Fahrzeugs (V) freiliegend vorhanden ist und die Lese-Einheit (220) an der Fahrzeug-Außenseite und die Lese-Einheit (221) an der Fahrzeug-Innenseite in einem Gehäuse zusammengefasst sind.

10. System (1, 201) für Authentifizierung beim Ein-und Aussteigen, das umfasst:
ein fahrzeuginternes System (20, 220), das an einem Fahrzeug (V) angebracht ist; und
eine externe Vorrichtung (30, 230), die außerhalb des Fahrzeugs (V) vorhanden ist, wobei das fahrzeuginterne System (20, 220) enthält:
eine Lese-Einheit (22), die in dem Fahrzeug (V) vorhanden und so ausgeführt ist, dass sie Identifikations-Informationen liest, mit denen eine Person identifiziert werden kann;
eine Kommunikations-Einheit (24), die die von der Lese-Einheit (22) gelesenen Identifikations-Informationen zu der externen Vorrichtung (30, 230) überträgt und die auf Basis der Identifikations-Informationen durch die externe Vorrichtung (30, 230) abgerufene Abrufergebnis-Informationen empfängt;
einen Prozessor (25d) für Autorisierung von Ein- und Aussteigen, der in der Lage ist, einen Prozess zum Autorisieren beim Ein-und Aussteigen einer durch die Identifikations-Informationen angegebenen Person an dem Fahrzeug (V) auf Basis der durch die Kommunikations-Einheit (24) empfangenen Abrufergebnis-Informationen auszuführen; sowie
eine Ausgabevorrichtung, die eine Meldung dahingehend ausgibt, dass das Ein- und Aussteigen der Person nicht autorisiert ist.

11. System (301) für Authentifizierung beim Ein-und Aussteigen, das umfasst:
ein fahrzeuginternes System (320), das an einem Fahrzeug (V) angebracht ist; und
eine externe Vorrichtung (330), die außerhalb des Fahrzeugs (V) vorhanden ist, wobei
das fahrzeuginterne System (320) enthält:
eine Lese-Einheit (22), die in dem Fahrzeug (V) vorhanden und so ausgeführt ist, dass sie Identifikations-Informationen liest, mit denen eine Person identifiziert werden kann;
eine Kommunikations-Einheit (24), die Fahrzeug-Identifikations-Informationen, die das Fahrzeug (V) angeben, zu der externen Vorrichtung (330) überträgt und die auf Basis der Fahrzeug-Identifikations-Informationen durch die externe Vorrichtung (330) abgerufene Abrufergebnis-Informationen empfängt;
einen Prozessor (25d) für Autorisierung von Ein- und Aussteigen, der in der Lage ist, einen Prozess zum Autorisieren von Ein-und Aussteigen einer durch die Identifikations-Informationen angegebenen Person an dem Fahrzeug (V) auf Basis der durch die Lese-Einheit (22) gelesenen Identifikations-Informationen sowie der durch die Kommunikations-Einheit (24) empfangenen Abrufergebnis-Informationen auszuführen; sowie
eine Ausgabevorrichtung, die eine Meldung dahingehend ausgibt, dass das Ein- und Aussteigen der Person nicht autorisiert ist.

12. Fahrzeuginternes System (20) nach einem der Ansprüche 2 bis 5, wobei
die Reservierungs-Informationen Informationen zu einer reservierten Ein- und Ausstiegszeit enthält, mit denen eine reservierte Ein- und Ausstiegszeit angegeben wird, und
die Informationen zu einer reservierten Ein- und Ausstiegszeit beim Authentifizieren einer angegebenen Person berücksichtigt werden.

13. System (301) für Authentifizierung beim Ein-und Aussteigen nach den Ansprüchen 10 oder 11, wobei
das Fahrzeugsystem (20, 220, 320), wenn ein Ein- und Aussteigen der Person nicht autorisiert ist, eine Benachrichtigung dahingehend, dass ein Ein- und Aussteigen nicht autorisiert ist, an die externe Vorrichtung (30, 230, 330) ausgibt, und
die externe Vorrichtung (30, 230, 330), wenn sie die Mitteilung dahingehend empfängt, dass das Ein- und Aussteigen der Person nicht autorisiert ist, mit dem fahrzeuginternen System (20, 220, 320) kommuniziert und es der Person gestattet, sich mit einem Betreiber der externen Vorrichtung (30, 230, 330) zu unterhalten.

## Revendications

1. Système embarqué (20, 220) comprenant :
une unité de lecture (22) pourvue dans un véhicule (V), et configurée pour lire de l'information d'identification capable d'identifier une personne ;
une unité de communication (24) qui transmet l'information d'identification lue par l'unité de lecture (22) à un dispositif externe (30, 230) à l'extérieur du véhicule (V), et qui reçoit de l'information de résultat de récupération récupérée sur base de l'information d'identification par le dispositif externe (30, 230) ;
un processeur d'autorisation de montée/descente (25d) capable d'exécuter un processus d'autorisation de montée/descente d'une personne spécifiée par l'information d'identification sur le véhicule (V) sur base de l'information de résultat de récupération reçue par l'unité de communication (24) ; et
un dispositif de sortie qui envoie un message indiquant que la montée/descente de la personne n'est pas autorisée.

2. Système embarqué (20) selon la revendication 1, dans lequel
l'information de résultat de récupération comprend de l'information de résultat d'authentification correspondant à un résultat d'authentification de l'information d'identification obtenue par le dispositif externe (30) sur base de l'information d'identification transmise au dispositif externe (30) et d'information de réservation qui a été enregistrée à l'avance dans le dispositif externe (30), et qui a trait à une réservation du véhicule (V) ayant transmis l'information d'identification.

3. Système embarqué (20) selon la revendication 2, comprenant en outre :
une unité d'acquisition d'information de position (23) qui acquiert de l'information de position actuelle indiquant une position actuelle du véhicule (V), dans lequel
l'unité de communication (24) transmet l'information de position actuelle acquise par l'unité d'acquisition d'information de position (23) au dispositif externe (30), et
le dispositif externe (30) génère l'information de résultat d'authentification indiquant qu'une personne spécifiée par l'information d'identification est authentifiée quand une personne spécifiée par l'information d'identification transmise par l'unité de communication (24) correspond à une personne spécifiée par de l'information sur la personne effectuant une réservation incluse dans l'information de réservation du véhicule (V) extraite sur base de l'information d'identification, et quand une position actuelle du véhicule (V) spécifiée par l'information de position actuelle transmise par l'unité de communication (24) correspond à une position de montée/descente spécifiée par de l'information de position de montée/descente réservée incluse dans l'information de réservation extraite sur base de l'information d'identification.

4. Système embarqué (220) selon la revendication 1, dans lequel
l'information de résultat de récupération comprend de l'information de réservation qui a été enregistrée à l'avance dans le dispositif externe (230) et qui a trait à la réservation du véhicule (V) extraite par le dispositif externe (230) sur base de l'information d'identification transmise au dispositif externe (230).

5. Système embarqué (220) selon la revendication 4, comprenant en outre :
une unité d'acquisition d'information de position (23) qui acquiert de l'information de position actuelle indiquant une position actuelle du véhicule (V) ; et
un processeur d'authentification (225f) qui authentifie une personne spécifiée par l'information d'identification sur base de l'information d'identification lue par l'unité de lecture (22), de l'information de position actuelle acquise par l'unité d'acquisition d'information de position (23), et de l'information de réservation incluse dans l'information de résultat de récupération reçue par l'unité de communication (24), dans lequel
le processeur d'authentification (225f) qui authentifie une personne spécifiée par l'information d'identification quand une personne spécifiée par l'information d'identification lue par l'unité de lecture (22) correspond à une personne spécifiée par l'information sur la personne effectuant une réservation incluse dans l'information de réservation reçue par l'unité de communication (24), et quand une position actuelle du véhicule (V) spécifiée par l'information de position actuelle acquise par l'unité d'acquisition d'information de position (23) correspond à une position de montée/descente spécifiée par de l'information de position de montée/descente réservée incluse dans l'information de réservation reçue par l'unité de communication (24).

6. Système embarqué (320) comprenant :
une unité de lecture (22) pourvue dans un véhicule (V), et configurée pour lire de l'information d'identification capable d'identifier une personne ;
une unité de communication (24) qui transmet de l'information d'identification de véhicule pour spécifier le véhicule (V) à un dispositif externe (330) à l'extérieur du véhicule (V), et qui reçoit de l'information de résultat de récupération récupérée sur base de l'information d'identification du véhicule par le dispositif externe (330) ; un processeur d'autorisation de montée/descente (25d) capable d'exécuter un processus d'autorisation de montée/descente d'une personne spécifiée par l'information d'identification sur le véhicule (V) sur base de l'information d'identification lue par l'unité de lecture (22) et de l'information de résultat de récupération reçue par l'unité de communication (24) ; et
un dispositif de sortie qui envoie un message indiquant que la montée/descente de la personne n'est pas autorisée.

7. Système embarqué (20, 220, 320) selon l'une quelconque des revendications 1 à 6, dans lequel
le processeur d'autorisation de montée/descente (25d) autorise une montée/descente d'une personne spécifiée par l'information d'identification sur le véhicule (V) quand la personne spécifiée par l'information d'identification est authentifiée, et n'autorise pas une montée/descente d'une personne spécifiée par l'information d'identification sur le véhicule (V) quand la personne spécifiée par l'information d'identification n'est pas authentifiée.

8. Système embarqué (20, 220, 320) selon l'une quelconque des revendications 1 à 7, comprenant en outre :
un processeur d'actionnement de portière (25e) qui exécute un processus d'ouverture de portière consistant à ouvrir une portière (D) du véhicule (V) lorsqu'une montée/descente d'une personne spécifiée par l'information d'identification sur le véhicule (V) est autorisée par le processeur d'autorisation de montée/descente (25d), et qui n'exécute pas le processus d'ouverture de portière lorsqu'une montée/descente d'une personne spécifiée par l'information d'identification sur le véhicule (V) n'est pas autorisée par le processeur d'autorisation de montée/descente (25d).

9. Système embarqué (20, 220, 320) selon l'une quelconque des revendications 1 à 8, dans lequel
l'unité de lecture (22) comprend une unité de lecture à l'extérieur du véhicule (22O) pourvue pour être exposée à l'extérieur du véhicule (V) et une unité de lecture à l'intérieur du véhicule (22I) pourvue pour être exposée à l'intérieur du véhicule (V), et l'unité de lecture à l'extérieur du véhicule (22O) et l'unité de lecture à l'intérieur du véhicule (22I) sont réunies par un boîtier.

10. Système d'authentification de montée/descente (1, 201) comprenant :
un système embarqué (20, 220) monté sur un véhicule (V) ; et
un dispositif externe (30, 230) pourvu à l'extérieur du véhicule (V), dans lequel
le système embarqué (20, 220) comprend :
une unité de lecture (22) pourvue dans le véhicule (V) et configurée pour lire de l'information d'identification capable d'identifier une personne ;
une unité de communication (24) qui transmet l'information d'identification lue par l'unité de lecture (22) au dispositif externe (30, 230), et qui reçoit de l'information de résultat de récupération récupérée sur base de l'information d'identification par le dispositif externe (30, 230) ;
un processeur d'autorisation de montée/descente (25d) capable d'exécuter un processus d'autorisation de montée/descente d'une personne spécifiée par l'information d'identification sur le véhicule (V) sur base de l'information de résultat de récupération reçue par l'unité de communication (24) ; et
un dispositif de sortie qui envoie un message indiquant que la montée/descente de la personne n'est pas autorisée.

11. Système d'authentification de montée/descente (301) comprenant :
un système embarqué (320) monté sur un véhicule (V) ; et
un dispositif externe (330) pourvu à l'extérieur du véhicule (V), dans lequel
le système embarqué (320) comprend :
une unité de lecture (22) pourvue dans le véhicule (V) et configurée pour lire de l'information d'identification capable d'identifier une personne ;
une unité de communication (24) qui transmet de l'information d'identification de véhicule pour spécifier le véhicule (V) au dispositif externe (330), et qui reçoit de l'information de résultat de récupération récupérée sur base de l'information d'identification du véhicule par le dispositif externe (330) ;
un processeur d'autorisation de montée/descente (25d) capable d'exécuter un processus d'autorisation de montée/descente d'une personne spécifiée par l'information d'identification sur le véhicule (V) sur base de l'information d'identification lue par l'unité de lecture (22) et de l'information de résultat de récupération reçue par l'unité de communication (24) ; et
un dispositif de sortie qui envoie un message indiquant que la montée/descente de la personne n'est pas autorisée.

12. Système embarqué (20) selon l'une quelconque des revendications 2 à 5, dans lequel
l'information de réservation comprend de l'information de temps de montée/descente réservé pour spécifier un temps de montée/descente réservé, et
l'information de temps de montée/descente réservé est prise en compte lors de l'authentification d'une personne spécifiée.

13. Système d'authentification de montée/descente (301) selon la revendication 10 ou 11, dans lequel
le système embarqué (20, 220, 320), quand une montée/descente de la personne n'est pas autorisée, envoie une notification du fait qu'une montée/descente n'est pas autorisée au dispositif externe (30, 230, 330), et
le dispositif externe (30, 230, 330), quand il reçoit la notification du fait que la montée/descente de la personne n'est pas autorisée, communique avec le système embarqué (20, 220, 320), et permet à la personne d'établir une conversation avec un opérateur du dispositif externe (30, 230, 330).
